# EUROPEAN PATENT APPLICATION

(11) **EP 4 109 257 A1**
(43) Date of publication of application: **28.12.2022**
(21) Application number: 22162430.7
(22) Date of filing: 16.03.2022
(51) Int. Cl.: G06F 9/50

(54) **METHODS AND APPARATUS TO FACILITATE SERVICE PROXYING**

(30) Priority: 25.06.2021 US 202117359349
(71) Applicant: Intel Corporation, Santa Clara, CA 95054 (US)
(72) Inventor: CARRANZA, Marcos, Portland, OR 97229 (US); DOSHI, Kshitij, Tempe, AZ 85282 (US); GUIM BERNAT, Francesc, Barcelona (ES); KUMAR, Karthik, Chandler, AZ 85249 (US); METSCH, Thijs, 50321 Bruehl (DE); HOBAN, Adrian, Cratloe, V95YYC4 (IE)
(74) Representative: Viering, Jentschura & Partner mbB Patent- und Rechtsanwälte

(57) **Abstract**

Example methods, apparatus, and systems to facilitate service proxying are disclosed. An example apparatus includes interface circuitry to access a service request intercepted by from an infrastructure processing unit, the service request corresponding to a first node; instructions in the apparatus; and infrastructure sidecar circuitry to execute the instructions to: identify an active service instance corresponding to the service request; compare first telemetry data corresponding to the active service instance to a service quality metric; select a second node to service the service request based on the comparison and further telemetry data; and cause transmission of the service request to the second node.

## Description

### FIELD OF THE DISCLOSURE

This disclosure relates generally to computing devices, and, more particularly, to methods and apparatus to facilitate service proxying.

### BRIEF DESCRIPTION

In cloud-native computing environments, the decomposition of erstwhile large monolithic applications into microservices and event-driven functions hasbeen widely embraced dues to the velocity, scalability, flexibility, and resilience benefits. In some examples, decomposition is facilitated through service meshes that move network and security particulars from individual services and place them into "sidecars" or "sidecar circuitry" which frees developers of services from minutiae of discovery, connection setup, and communication with peer microservices, functions, etc. A sidecar or sidecar circuitry is a deployment pattern (e.g., a container) inserted into a pod (e.g., a collection of containers and/or application containers) within a platform of the cloud-native computing environment.

### BRIEF DESCRIPTION OF THE DRAWINGS

FIG. 1 illustrates an overview of an edge cloud configuration for edge computing.
FIG. 2 illustrates operational layers among endpoints, an edge cloud, and cloud computing environments.
FIG. 3 illustrates a block diagram of an example environment for networking and services in an edge computing system.
FIG. 4 illustrates deployment of a virtual edge configuration in an edge computing system operated among multiple edge nodes and multiple tenants.
FIG. 5 illustrates various compute arrangements deploying containers in an edge computing system.
FIG. 6 illustrates an example compute and communication use case involving mobile access to applications in an example edge computing system.
FIG. 7 is a block diagram of an example system described in conjunction with examples disclosed herein to manage quality of service.
FIG. 8 is a block diagram of an implementation of the example infrastructure processing unit sidecar circuitry of FIG. 7.
FIG. 9 is another block diagram of an implementation of the example infrastructure sidecar circuitry of FIG. 7.
FIG. 10 illustrates a flowchart representative of example machine readable instructions that may be executed to implement the infrastructure processing unit sidecar circuitry of FIG. 8.
FIGS. 11A-11C illustrates a flowchart representative of example machine readable instructions that may be executed to implement the infrastructure sidecar circuitry of FIG. 9.
FIG. 12 is a block diagram of an example implementation of an example compute node that may be deployed in one of the infrastructure processing unit in FIGS. 1-4 and/or 6-7.
FIG. 13 is a block diagram of an example processor platform structured to execute the instructions of FIGS. 10 to implement the infrastructure processing unit and/or infrastructure processing unit sidecar circuitry of FIGS. 7 and/or 8.
FIG. 14 is a block diagram of an example processor platform structured to execute the instructions of FIG. 11A-11C to implement the infrastructure and/or the infrastructure sidecar circuitry of FIGS. 7 and/or 9.
FIG. 15 is a block diagram of an example implementation of the processor circuitry of FIG. 14.
FIG. 16 is a block diagram of another example implementation of the processor circuitry of FIG. 14.
FIG. 17 is a block diagram of an example software distribution platform (e.g., one or more servers) to distribute software (e.g., software corresponding to the example machine readable instructions of FIGS. 10, 11A, 11B, and/or 11C to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

The figures are not to scale. In general, the same reference numbers will be used throughout the drawing(s) and accompanying written description to refer to the same or like parts.

Descriptors "first," "second," "third," etc. are used herein when identifying multiple elements or components which may be referred to separately. Unless otherwise specified or understood based on their context of use, such descriptors are not intended to impute any meaning of priority or ordering in time but merely as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events. As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

### DETAILED DESCRIPTION

Flexible and easily manageable rack level solutions are desirable for network edge processing and/or virtual machine processing, where multiple edge domains share a pool of resources. For example, if a process is memory intensive and/or processor intensive, it may be advantageous to use service meshes to split the process into sub processes that can be executed by different computing devices to ensure efficiency, speed, and/or accuracy. An edge deployment environment may include infrastructure and one or more platforms (e.g., IoT and on-premise edge, network edge, core DC, public cloud, etc.) implementing one or more edge appliances (e.g., computing devices, end devices, edge device, nodes, etc.). An infrastructure includes nodes (e.g., individual machines including heterogenous devices) and connection network between them. Each of these computing devices may have a set of resources that may be shared with other connected devices. As used herein, pooled resources are resources (e.g., memory, CPU, GPU, accelerators, etc.) of a first device, a single Edge node device, and/or first virtual machine that allocates or ear-marks resources for a particular tenant/user. Pooled resources can be shared with and/or used by another device to perform a particular task. In this manner, an application can sent out service requests to utilize the resources of multiple computing device and/or virtual machines to perform a task in a fast and efficient manner.

Service meshes (e.g., mesh proxies) are components implemented in containers that implement a common set of functionalities needed for directory lookups to locate other services on the same or a different machine. Containers are decentralized computing resources that can run large, distributed applications with low overhead. In some examples, containers include sidecar containers. Sidecar containers, sidecars, or sidecar circuitry are containers that run along with the main contain of a pod, node, device, etc. The sidecar container provides additional functionality to a container without changing the container. A mesh proxy operates as a communication bridge to other mesh-proxies in other containers and implements common infrastructure services such as transport, secure transport, a connection to host bridges, load-balancing, protocol bridging, etc. The mesh proxy is implemented in the computing device and is in communication with the operating system of the computing device. In this manner, applications can be platform-agnostic (e.g., without including code corresponding to a particular operating system and/or particular hardware resources of the device/platform that the application is implemented in). Thus, the applications can run on a device and remain agnostic of the operating system and/or hardware of the underlying computing device as well as other connected computing devices because the mesh proxy operates as the bridge between the application and the operating system of the device and other devices.

Although implementing mesh proxies on the CPU of edge devices adds flexibility, the flexibility adds overhead, latency and performance variability due to the scheduling and execution of the sidecar based proxies. Because edge environments are resource constrained and require low response times, low and predictable latency is highly valued on the edge. Additionally, complex overhead of load balancing, other run-time variations, and telemetry collection add dilation of response time, jitter, high hysteresis, and cost. Additionally, across one or more chains of microservices, application response times can easily exceed the few milliseconds that are required to function according to service quality metrics (e.g., latency, response time, efficiency, etc.). Sidecar circuitry has a limited time (e.g., milliseconds) to execute one or more functions or service chains while accounting for various service management actions like load-balancing, migration, communication, auto-scaling, resource redirection for service level agreements, etc. Load-balancing includes splitting a service (e.g., service instances) between multiple endpoints (e.g., edge devices, edge appliances, infrastructure device, hardware switches, etc.). Auto-scaling includes activating new devices (e.g., endpoints, devices, appliances, hardware switches, etc.) when the service instance(s) that are currently implementing a service are oversubscribed or deactivating of one or more of the instances implementing the service when usage declines. The service level agreement (SLA) requirements and/or service level objectives (SLO) are requirements for performing the task. For example, an SLA/SLO requirement(s) of a service request from an application may correspond to bandwidth requirements, latency requirements, jitter requirements, number/percentage of packet drops, number of images processed per second, etc.

Examples disclosed herein provide an infrastructure processing unit (IPU) to utilize infrastructure and appliance telemetry to guide smart scheduling across the edge and edge to cloud migration of services. Examples disclosed herein include implementing IPU sidecar circuitry in the IPU and implementing infrastructure sidecar circuitry in the infrastructure. Using examples disclosed herein, the role of the IPU and the infrastructure is extended through the use of IPU sidecar (e.g., logic implemented in container circuitry) and infrastructure sidecar circuitry to achieve low latency service management with guidance from software, while making service mesh execution efficient and extensible. For this integration of dynamic load balancing, auto-scaling, and local orchestration, examples disclosed herein create an "IPU-mesh" in which one or more IPUs that host application sidecars also communicate with an infrastructure extension (e.g., infrastructure sidecar circuitry implemented in the infrastructure). As used herein, remote devices includes both a peer device (e.g., processing unit) operating in a different node in the same platform and a device (e.g., processing unit) operating at in a different node in a different platform. Thus, requests may arise anywhere in a network and can be load-balanced and/or auto-scaled at low latency and high efficiency.

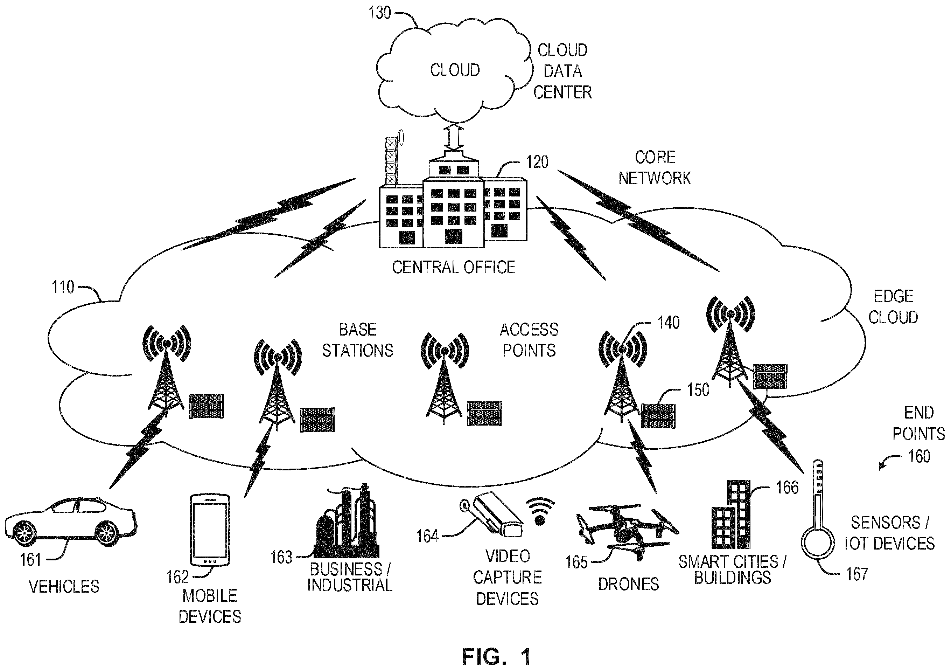

FIG. 1 is a block diagram 100 showing an overview of a configuration for edge computing, which includes a layer of processing referred to in many of the following examples as an "edge cloud". As shown, the edge cloud 110 is co-located at an edge location, such as an access point or base station 140, a local processing hub 150, or a central office 120, and thus may include multiple entities, devices, and equipment instances. The edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and IoT devices 167, etc.) than the cloud data center 130. Compute, memory, and storage resources which are offered at the edges in the edge cloud 110 are critical to providing ultra-low latency response times for services and functions used by the endpoint data sources 160 as well as reduce network backhaul traffic from the edge cloud 110 toward cloud data center 130 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, For example, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

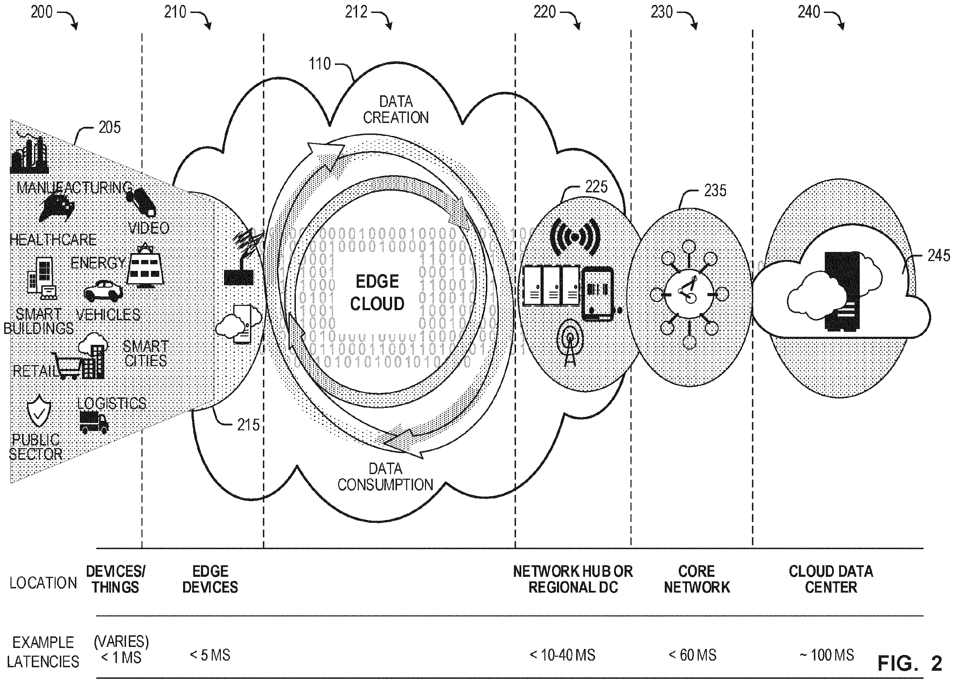

FIG. 2 illustrates operational layers among endpoints, an edge cloud, and cloud computing environments. Specifically, FIG. 2 depicts examples of computational use cases 205, utilizing the edge cloud 110 among multiple illustrative layers of network computing. The layers begin at an endpoint (devices and things) layer 200, which accesses the edge cloud 110 to conduct data creation, analysis, and data consumption activities. The edge cloud 110 may span multiple network layers, such as an edge devices layer 210 having gateways, on-premise servers, or network equipment (nodes 215) located in physically proximate edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the edge cloud 110 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 200, under 5 ms at the edge devices layer 210, to even between 10 to 40 ms when communicating with nodes at the network access layer 220. Beyond the edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For example, from the perspective of the core network data center 235 or a cloud data center 245, a central office or content data network may be considered as being located within a "near edge" layer ("near" to the cloud, having high latency values when communicating with the devices and endpoints of the use cases 205), whereas an access point, base station, on-premise server, or network gateway may be considered as located within a "far edge" layer ("far" from the cloud, having low latency values when communicating with the devices and endpoints of the use cases 205). It will be understood that other categorizations of a particular network layer as constituting a "close", "local", "near", "middle", or "far" edge may be based on latency, distance, number of network hops, or other measurable characteristics, as measured from a source in any of the network layers 200-240.

The various use cases 205 may access resources under usage pressure from incoming streams, due to multiple services utilizing the edge cloud. To achieve results with low latency, the services executed within the edge cloud 110 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 110 may provide the ability to serve and respond to multiple applications of the use cases 205 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required because edge locations may be unmanned and may even need permissioned access (e.g., when housed in a third-party location). Such issues are magnified in the edge cloud 110 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 110 (network layers 200-240), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 110.

As such, the edge cloud 110 is formed from network components and functional features operated by and within edge gateway nodes, edge aggregation nodes, or other edge compute nodes among network layers 210-230. The edge cloud 110 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 110 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

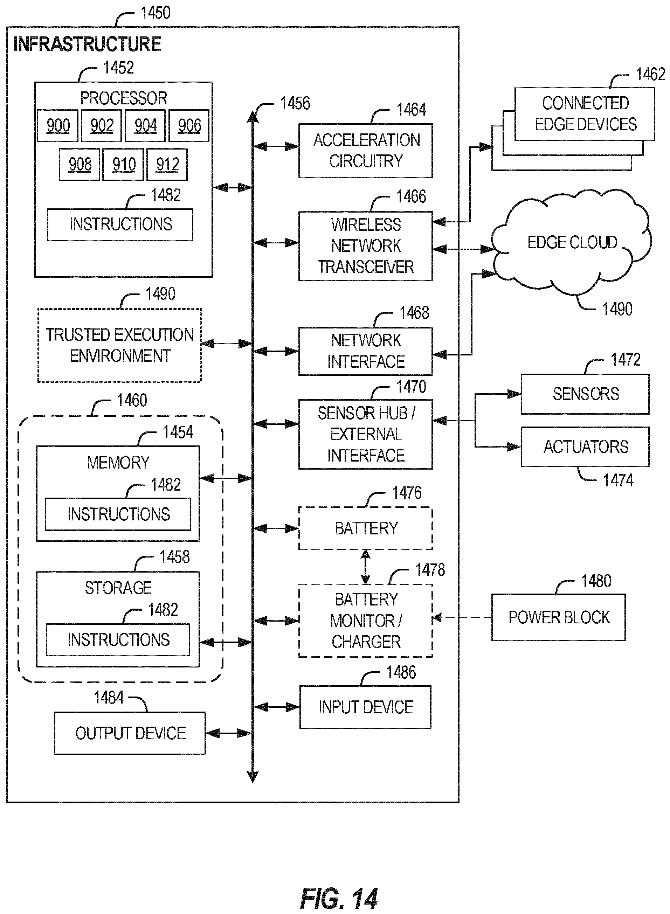

The network components of the edge cloud 110 may be servers, multi-tenant servers, appliance computing devices, and/or any other type of computing devices. For example, the edge cloud 110 may include an appliance computing device that is a self-contained electronic system including a housing, a chassis, a case, or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 14. The edge cloud 110 may also include one or more servers and/or one or more multi-tenant servers. Such a server may include an operating system and a virtual computing environment. A virtual computing environment may include a hypervisor manager (spawning, deploying, destroying, etc.) one or more virtual machines, one or more containers, etc. Such virtual computing environments provide an execution environment in which one or more applications and/or other software, code or scripts may execute while being isolated from one or more other applications, software, code, or scripts.

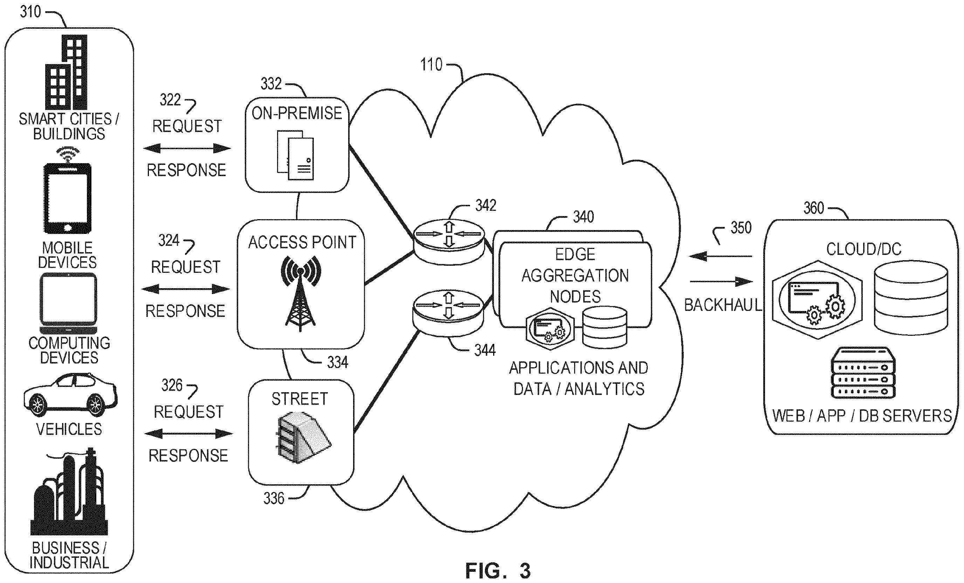

FIG. 3 illustrates a block diagram of an example environment 300 in which various client endpoints 310 (in the form of mobile devices, computers, autonomous vehicles, business computing equipment, industrial processing equipment) exchange requests and responses with the example edge cloud 110. For example, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the edge cloud 110 to aggregate traffic and requests. Thus, within the edge cloud 110, the TSP may deploy various compute and storage resources, such as at edge aggregation nodes 340, to provide requested content. The edge aggregation nodes 340 and other systems of the edge cloud 110 are connected to a cloud or data center 360, which uses a backhaul network 350 to fulfill higher-latency requests from a cloud/data center for websites, applications, database servers, etc. Additional or consolidated instances of the edge aggregation nodes 340 and the aggregation points 342, 344, including those deployed on a single server framework, may also be present within the edge cloud 110 or other areas of the TSP infrastructure.

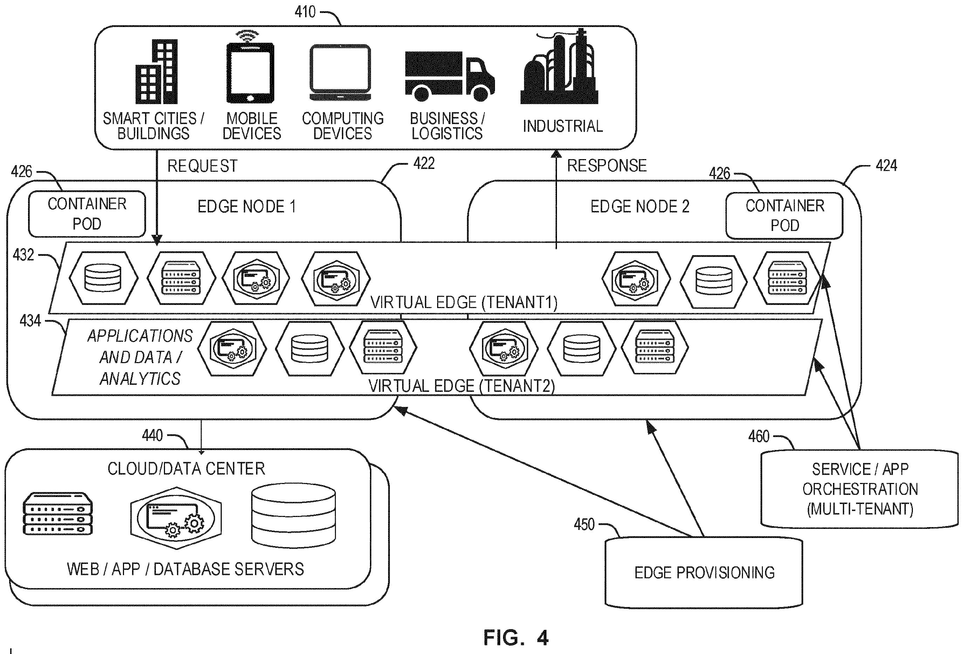

FIG. 4 illustrates deployment and orchestration for virtual edge configurations across an edge computing system operated among multiple edge nodes and multiple tenants. Specifically, FIG. 4 depicts coordination of a first edge node 422 and a second edge node 424 in an edge computing system 400, to fulfill requests and responses for various client endpoints 410 (e.g., smart cities / building systems, mobile devices, edge appliances, computing devices, business/logistics systems, industrial systems, etc.), which access various virtual edge instances. Here, the virtual edge instances 432, 434 provide edge compute capabilities and processing in an edge cloud, with access to a cloud/data center 440 for higher-latency requests for websites, applications, database servers, etc. However, the edge cloud enables coordination of processing among multiple edge nodes for multiple tenants or entities.

In the example of FIG. 4, these virtual edge instances include: a first virtual edge 432, offered to a first tenant (Tenant 1), which offers a first combination of edge storage, computing, and services; and a second virtual edge 434, offering a second combination of edge storage, computing, and services. The virtual edge instances 432, 434 are distributed among the edge nodes 422, 424, and may include scenarios in which a request and response are fulfilled from the same or different edge nodes. The configuration of the edge nodes 422, 424 to operate in a distributed yet coordinated fashion occurs based on edge provisioning functions 450. The functionality of the edge nodes 422, 424 to provide coordinated operation for applications and services, among multiple tenants, occurs based on orchestration functions 460.

It should be understood that some of the devices 410 are multi-tenant devices where Tenant 1 may function within a tenant1 'slice' while a Tenant 2 may function within a tenant2 'slice' (and, in further examples, additional or sub-tenants may exist; and each tenant may even be specifically entitled and transactionally tied to a specific set of features all the way day to specific hardware features). A trusted multi-tenant device may further contain a tenant-specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 422, 424 may operate as security feature enforcement points for local resources allocated to multiple tenants per node. Additionally, tenant runtime and application execution (e.g., in instances 432, 434) may serve as an enforcement point for a security feature that creates a virtual edge abstraction of resources spanning potentially multiple physical hosting platforms. Finally, the orchestration functions 460 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitionings may contain a RoT capability and where fan-out and layering according to a DICE model may further be applied to Edge Nodes. Cloud computing nodes consisting of containers, FaaS engines, Servlets, servers, or other computation abstraction may be partitioned according to a DICE layering and fan-out structure to support a RoT context for each. Accordingly, the respective devices 410, 422, and 440 spanning RoTs may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 4. For example, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For example, each of the edge nodes 422, 424 may implement the use of containers, such as with the use of a container "pod" 426, 428 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 432, 434 are partitioned according to the needs of each container.

With the use of container pods, a pod controller oversees the partitioning and allocation of containers and resources. The pod controller receives instructions from an orchestrator (e.g., the orchestrator 460) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For example, the orchestrator 460 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

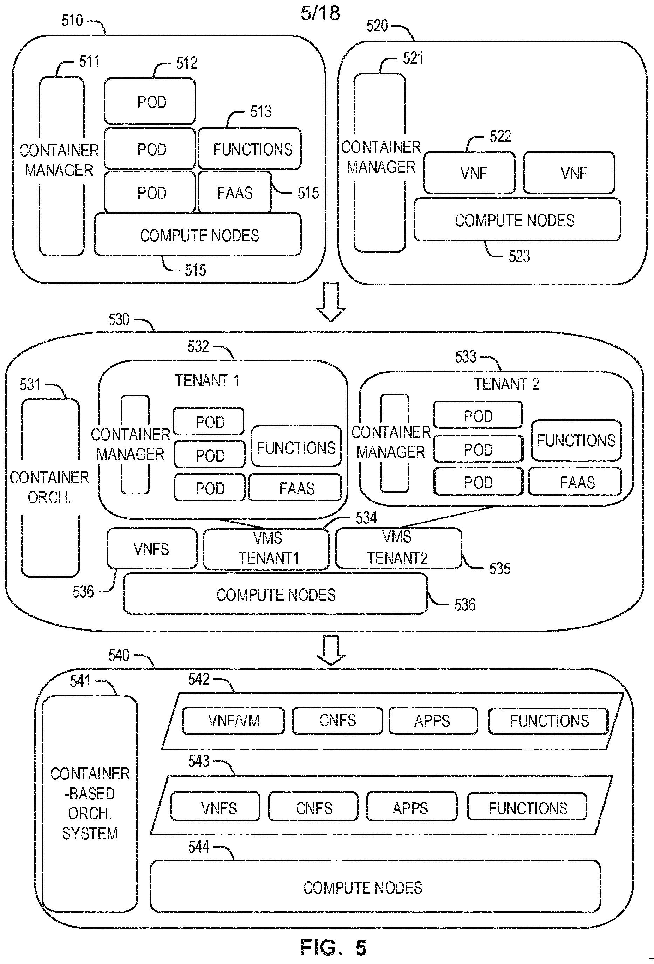

FIG. 5 illustrates additional compute arrangements deploying containers in an edge computing system. As a simplified example, system arrangements 510, 520 depict settings in which a pod controller (e.g., container managers 511, 521, and a container orchestrator 531) is adapted to launch containerized pods, functions, and functions-as-a-service instances through execution via compute nodes (515 in arrangement 510), or to separately execute containerized virtualized network functions through execution via compute nodes (523 in arrangement 520). This arrangement is adapted for use of multiple tenants in an example system arrangement 530 (using compute nodes 537), where containerized pods (e.g., pods 512), functions (e.g., functions 513, VNFs 522, 536), and functions-as-a-service instances (e.g., FaaS instance 514) are launched within virtual machines (e.g., VMs 534, 535 for tenants 532, 533) specific to respective tenants (aside the execution of virtualized network functions). This arrangement is further adapted for use in system arrangement 540, which provides containers 542, 543, or execution of the various functions, applications, and functions on compute nodes 544, as coordinated by an container-based orchestration system 541.

The system arrangements of depicted in FIG. 5 provides an architecture that treats VMs, Containers, and Functions equally in terms of application composition (and resulting applications are combinations of these three ingredients). Each ingredient may involve use of one or more accelerator (FPGA, ASIC) components as a local backend. In this manner, applications can be split across multiple edge owners, coordinated by an orchestrator.

In the context of FIG. 5, the pod controller/container manager, container orchestrator, and individual nodes may provide a security enforcement point. However, tenant isolation may be orchestrated where the resources allocated to a tenant are distinct from resources allocated to a second tenant, but edge owners cooperate to ensure resource allocations are not shared across tenant boundaries. Or, resource allocations could be isolated across tenant boundaries, as tenants could allow "use" via a subscription or transaction/contract basis. In these contexts, virtualization, containerization, enclaves, and hardware partitioning schemes may be used by edge owners to enforce tenancy. Other isolation environments may include: bare metal (dedicated) equipment, virtual machines, containers, virtual machines on containers, or combinations thereof.

In further examples, aspects of software-defined or controlled silicon hardware, and other configurable hardware, may integrate with the applications, functions, and services an edge computing system. Software defined silicon may be used to ensure the ability for some resource or hardware ingredient to fulfill a contract or service level agreement, based on the ingredient's ability to remediate a portion of itself or the workload (e.g., by an upgrade, reconfiguration, or provision of new features within the hardware configuration itself).

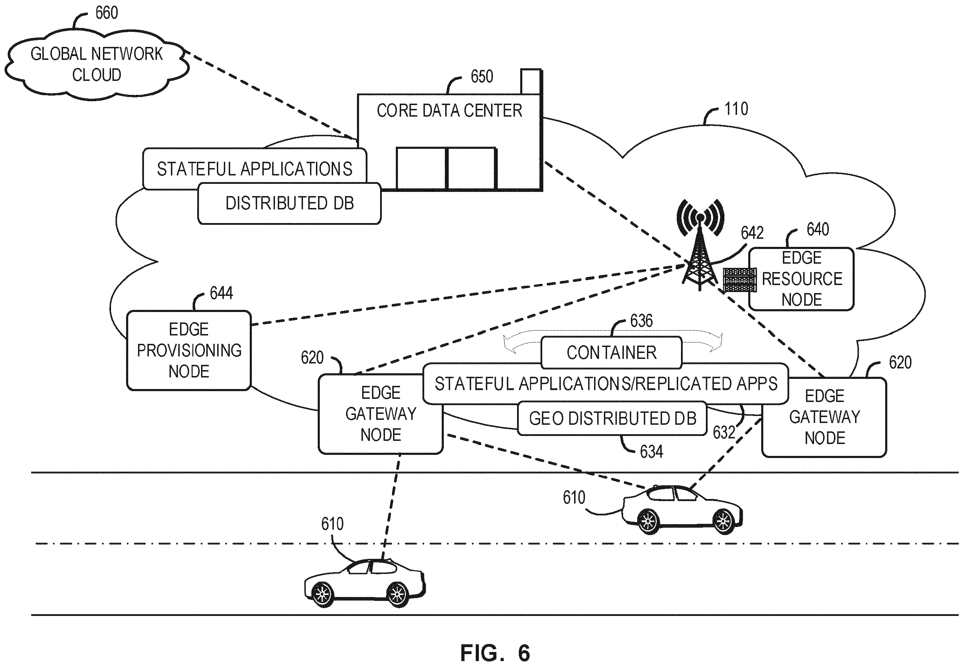

It should be appreciated that the edge computing systems and arrangements discussed herein may be applicable in various solutions, services, and/or use cases involving mobility. As an example, FIG. 6 shows an example simplified vehicle compute and communication use case involving mobile access to applications in an example edge computing system 600 that implements an edge cloud such as the edge cloud 110 of FIG .1. In this use case, respective client compute nodes 610 may be embodied as in-vehicle compute systems (e.g., in-vehicle navigation and/or infotainment systems) located in corresponding vehicles which communicate with example edge gateway nodes 620 during traversal of a roadway. For example, the edge gateway nodes 620 may be located in a roadside cabinet or other enclosure built-into a structure having other, separate, mechanical utility, which may be placed along the roadway, at intersections of the roadway, or other locations near the roadway. As respective vehicles traverse along the roadway, the connection between its client compute node 610 and a particular one of the edge gateway nodes 620 may propagate so as to maintain a consistent connection and context for the example client compute node 610. Likewise, mobile edge nodes may aggregate at the high priority services or according to the throughput or latency resolution requirements for the underlying service(s) (e.g., in the case of drones). The respective edge gateway devices 620 include an amount of processing and storage capabilities and, as such, some processing and/or storage of data for the client compute nodes 610 may be performed on one or more of the edge gateway nodes 620.

The edge gateway nodes 620 may communicate with one or more edge resource nodes 640, which are illustratively embodied as compute servers, appliances or components located at or in a communication base station 642 (e.g., a based station of a cellular network). As discussed above, the respective edge resource node(s) 640 include an amount of processing and storage capabilities and, as such, some processing and/or storage of data for the client compute nodes 610 may be performed on the edge resource node(s) 640. For example, the processing of data that is less urgent or important may be performed by the edge resource node(s) 640, while the processing of data that is of a higher urgency or importance may be performed by the edge gateway devices 620 (depending on, for example, the capabilities of each component, or information in the request indicating urgency or importance). Based on data access, data location or latency, work may continue on edge resource nodes when the processing priorities change during the processing activity. Likewise, configurable systems or hardware resources themselves can be activated (e.g., through a local orchestrator) to provide additional resources to meet the new demand (e.g., adapt the compute resources to the workload data).

The edge resource node(s) 640 also communicate with the core data center 650, which may include compute servers, appliances, and/or other components located in a central location (e.g., a central office of a cellular communication network). The example core data center 650 may provide a gateway to the global network cloud 660 (e.g., the Internet) for the edge cloud 110 operations formed by the edge resource node(s) 640 and the edge gateway devices 620. Additionally, in some examples, the core data center 650 may include an amount of processing and storage capabilities and, as such, some processing and/or storage of data for the client compute devices may be performed on the core data center 650 (e.g., processing of low urgency or importance, or high complexity).

The edge gateway nodes 620 or the edge resource node(s) 640 may offer the use of stateful applications 632 and a geographic distributed database 634. Although the applications 632 and database 634 are illustrated as being horizontally distributed at a layer of the edge cloud 110, it will be understood that resources, services, or other components of the application may be vertically distributed throughout the edge cloud (including, part of the application executed at the client compute node 610, other parts at the edge gateway nodes 620 or the edge resource node(s) 640, etc.). Additionally, as stated previously, there can be peer relationships at any level to meet service objectives and obligations. Further, the data for a specific client or application can move from edge to edge based on changing conditions (e.g., based on acceleration resource availability, following the car movement, etc.). For example, based on the "rate of decay" of access, prediction can be made to identify the next owner to continue, or when the data or computational access will no longer be viable. These and other services may be utilized to complete the work that is needed to keep the transaction compliant and lossless.

In further scenarios, a container 636 (or pod of containers) may be flexibly migrated from one of the edge nodes 620 to other edge nodes (e.g., another one of edge nodes 620, one of the edge resource node(s) 640, etc.) such that the container with an application and workload does not need to be reconstituted, re-compiled, re-interpreted in order for migration to work. However, in such settings, there may be some remedial or "swizzling" translation operations applied. For example, the physical hardware at the edge resource node(s) 640 may differ from the hardware at the edge gateway nodes 620 and therefore, the hardware abstraction layer (HAL) that makes up the bottom edge of the container will be re-mapped to the physical layer of the target edge node. This may involve some form of late-binding technique, such as binary translation of the HAL from the container native format to the physical hardware format, or may involve mapping interfaces and operations. A pod controller may be used to drive the interface mapping as part of the container lifecycle, which includes migration to/from different hardware environments.

The scenarios encompassed by FIG. 6 may utilize various types of mobile edge nodes, such as an edge node hosted in a vehicle (car/truck/tram/train) or other mobile unit, as the edge node will move to other geographic locations along the platform hosting it. With vehicle-to-vehicle communications, individual vehicles may even act as network edge nodes for other cars, (e.g., to perform caching, reporting, data aggregation, etc.). Thus, it will be understood that the application components provided in various edge nodes may be distributed in static or mobile settings, including coordination between some functions or operations at individual endpoint devices or the edge gateway nodes 620, some others at the edge resource node(s) 640, and others in the core data center 650 or global network cloud 660.

In further configurations, the edge computing system may implement FaaS computing capabilities through the use of respective executable applications and functions. In an example, a developer writes function code (e.g., "computer code" herein) representing one or more computer functions, and the function code is uploaded to a FaaS platform provided by, for example, an edge node or data center. A trigger such as, for example, a service use case or an edge processing event, initiates the execution of the function code with the FaaS platform.

In an example of FaaS, a container is used to provide an environment in which function code (e.g., an application which may be provided by a third party) is executed. The container may be any isolated-execution entity such as a process, a Docker or Kubernetes container, a virtual machine, etc. Within the edge computing system, various datacenter, edge, and endpoint (including mobile) devices are used to "spin up" functions (e.g., activate and/or allocate function actions) that are scaled on demand. The function code gets executed on the physical infrastructure (e.g., edge computing node) device and underlying virtualized containers. Finally, container is "spun down" (e.g., deactivated and/or deallocated) on the infrastructure in response to the execution being completed.

Further aspects of FaaS may enable deployment of edge functions in a service fashion, including a support of respective functions that support edge computing as a service (Edge-as-a-Service or "EaaS"). Additional features of FaaS may include: a granular billing component that enables customers (e.g., computer code developers) to pay only when their code gets executed; common data storage to store data for reuse by one or more functions; orchestration and management among individual functions; function execution management, parallelism, and consolidation; management of container and function memory spaces; coordination of acceleration resources available for functions; and distribution of functions between containers (including "warm" containers, already deployed or operating, versus "cold" which require initialization, deployment, or configuration).

The edge computing system 600 can include or be in communication with an edge provisioning node 644. The edge provisioning node 644 can distribute software such as the example computer readable instructions 1482 of FIG. 14, to various receiving parties for implementing any of the methods described herein. The example edge provisioning node 644 may be implemented by any computer server, home server, content delivery network, virtual server, software distribution system, central facility, storage device, storage node, data facility, cloud service, etc., capable of storing and/or transmitting software instructions (e.g., code, scripts, executable binaries, containers, packages, compressed files, and/or derivatives thereof) to other computing devices. Component(s) of the example edge provisioning node 644 may be located in a cloud, in a local area network, in an edge network, in a wide area network, on the Internet, and/or any other location communicatively coupled with the receiving party(ies). The receiving parties may be customers, clients, associates, users, etc. of the entity owning and/or operating the edge provisioning node 644. For example, the entity that owns and/or operates the edge provisioning node 644 may be a developer, a seller, and/or a licensor (or a customer and/or consumer thereof) of software instructions such as the example computer readable instructions 1482 of FIG. 14. The receiving parties may be consumers, service providers, users, retailers, OEMs, etc., who purchase and/or license the software instructions for use and/or re-sale and/or sub-licensing.

In an example, edge provisioning node 644 includes one or more servers and one or more storage devices. The storage devices host computer readable instructions such as the example computer readable instructions 1482 of FIG. 14, as described below. Similarly to edge gateway devices 620 described above, the one or more servers of the edge provisioning node 644 are in communication with a base station 642 or other network communication entity. In some examples, the one or more servers are responsive to requests to transmit the software instructions to a requesting party as part of a commercial transaction. Payment for the delivery, sale, and/or license of the software instructions may be handled by the one or more servers of the software distribution platform and/or via a third party payment entity. The servers enable purchasers and/or licensors to download the computer readable instructions 1482 from the edge provisioning node 644. For example, the software instructions, which may correspond to the example computer readable instructions 1482 of FIG. 14, may be downloaded to the example processor platform/s, which is to execute the computer readable instructions 1482 to implement the methods described herein.

In some examples, the processor platform(s) that execute the computer readable instructions 1482 can be physically located in different geographic locations, legal jurisdictions, etc. In some examples, one or more servers of the edge provisioning node 644 periodically offer, transmit, and/or force updates to the software instructions (e.g., the example computer readable instructions 1482 of FIG. 14) to ensure improvements, patches, updates, etc. are distributed and applied to the software instructions implemented at the end user devices. In some examples, different components of the computer readable instructions 1482 can be distributed from different sources and/or to different processor platforms; for example, different libraries, plug-ins, components, and other types of compute modules, whether compiled or interpreted, can be distributed from different sources and/or to different processor platforms. For example, a portion of the software instructions (e.g., a script that is not, in itself, executable) may be distributed from a first source while an interpreter (capable of executing the script) may be distributed from a second source.

In further examples, any of the compute nodes or devices discussed with reference to the present edge computing systems and environment may be fulfilled based on the components depicted in FIGS. 14A and 14. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

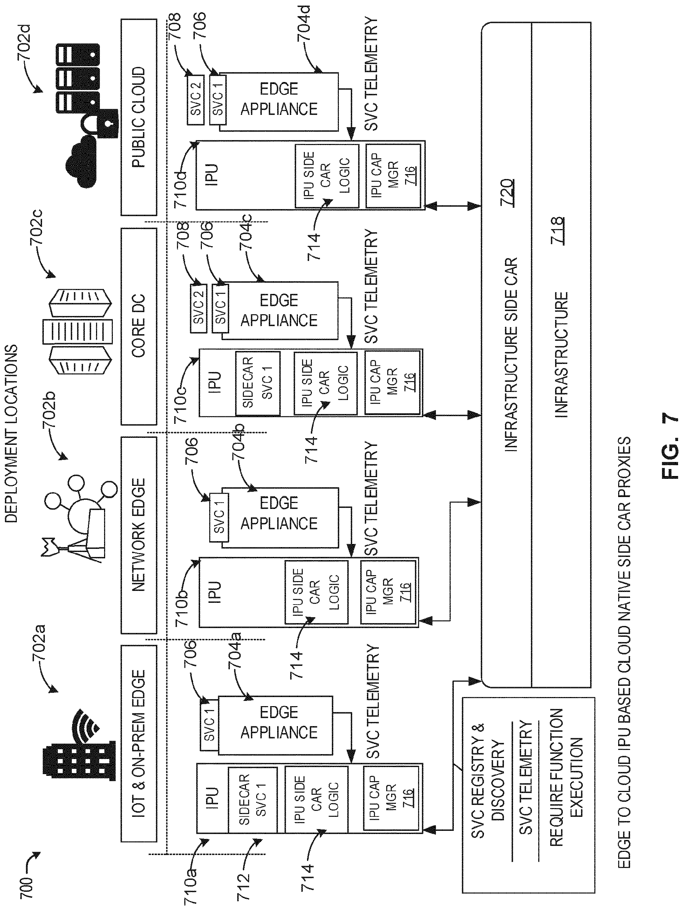

FIG. 7 is a block diagram of an example environment 700 to facilitate edge-to-edge and edge-to-cloud management of a cloud native service with co-active infrastructure and service proxying in accordance with examples disclosed herein. The example environment 700 includes example platforms 702a-702d, example edge appliances 704a-d, example services 706, 708 (e.g., service instance, container, etc.), example IPUs 710a-710d, an example sidecar service 712, example IPU sidecar circuitry 714, an example IPU capacity manager 716, example infrastructure 718, and an example infrastructure sidecar circuitry 720. Although the example of FIG. 7 corresponds to a cloud-based network, examples disclosed herein can be applied to any type of computing environment (e.g., virtual machines, racks of servers, etc.). In some examples, the infrastructure can be implemented by the cloud/data center 360, 440 of FIGS. 3 and/or 4 and/or the global network cloud 660 of FIG. 6. Additionally, the example edge appliances 704a-704d may correspond to the example local processing hub 150, the example edge nodes 340, 422, 424, 620, 644 of FIGS. 4 and/or 6.

The example platforms 702a-702d of FIG. 7 represent different platforms (e.g., deployment locations) that may be implemented in the example environment 700 in communication with the example infrastructure 718. The example platform 702a is an internet of things (IOT) and on-premise edge platform, the example platform 702b is a network edge platform, the example platform 702c is a core data center (DC) platform, and the example platform 702d is a public cloud platform. In some examples, different and/or additional platforms may be included or removed from the environment 700. Each platform 702a-702d includes at least one edge appliance 704a-704d, and at least one IPU 710a-710b. Although the example of FIG. 7 illustrates each platform 702a-702d including one edge appliance 704a-704d.

The example edge appliances 704a-704d of FIG. 7 are computing devices, nodes, endpoints, etc. that execute the example services 706, 708 (e.g., functions of a container). For example, the edge appliances 704a-704d may be edge devices, IoT devices, fog devices, virtual machines, servers, and/or any other type of computing device that is capable of executing instructions (e.g., service instances, containers, etc.). In some examples, the edge appliances 704a-704d transmits remote service innovations (e.g., service requests) to execute have the service 706, 708 or part of the service 706, 708 executed by a different device within the same platform (e.g., platform 702a), at a different platform (e.g., platforms 702b-d, if the request is coming from platform 702a), or at the unfractured 718. The edge appliances 704a-704d obtain and/or transmits service requests via the corresponding IPU 710a-710d. Each service instance 706, 708 implemented and/or requested by the example appliances 704a-704d is registered to the example infrastructure 718. In this manner, a corresponding sidecar circuitry proxy 712 on the IPU 710a can provide real time telemetry data of the capacity of the instance to absorb new requests.

The example IPUs 710a-710d of FIG. 7 offload sidecar processing from the CPUs of the edge appliances 704a-704d to the respective IPU 710a-710d. For example, the IPUs 710a-710d integrate with accelerators, implement root of trust and chain of trust capabilities, assist with telemetry processing, securing communications, hosting a service mesh, adding programmable acceleration in hardware or embedded software, enabling high performance streaming between devices, etc. As described above, the IPUs 710a-710d may include the example sidecar service proxy 712 that corresponds to the service 706 to provide real-time telemetry data of the capacity of the service 706 to absorb new requests. Additionally, the example IPUs 710a-710d include the example IPU sidecar circuitry 714. Each IPU 710a-710 obtains telemetry data from all edge appliances and/or service instances within the corresponding platform.

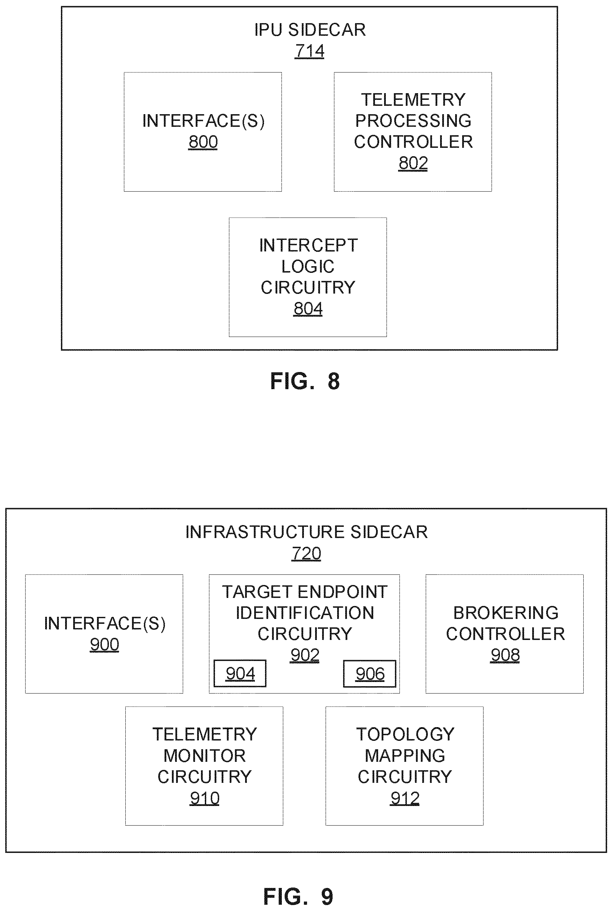

The example IPU sidecar circuitry 714 of FIG. 7 is a hardware component, firmware component, and/or an embedded software component, such as a container. The IPU sidecar circuitry 714 interacts with the infrastructure sidecar circuitry 720 to inject a low-level step into the normal peer-to-peer service invocations. The step provides the infrastructure 718 with information for making a just-in-time determination of whether or not to intervene and insert a load-balancing action, an auto-scaling action, a circuit breaking action, or other actions that are based on real-time assessments that are made at the infrastructure sidecar circuitry 720. The example IPU sidecar circuitry 714 transmits capacity data, response time data, and/or telemetry data to the example infrastructure sidecar circuitry 720 periodically, aperiodically, or based on a trigger. Additionally, the example IPU sidecar circuitry 714 transmits intercepted service requests to the example infrastructure sidecar circuitry 720 so that the example infrastructure sidecar circuitry 720 can make load balancing decisions, scaling decisions, etc., based on the up-to-date (e.g., live) telemetry data corresponding to the infrastructure 718 and the edge appliances 704a-704d across the platforms 702a-702d to ensure that the services are being executed according to service objectives. Additionally, the example IPU sidecar circuitry 714 transmits data corresponding to the service and/or instance properties at different nodes (e.g., edge appliance) of the corresponding platform (e.g., to discover and/or register the service and/or instance). The IPU sidecar circuitry 714 is further described below in conjunction with FIG. 8.

The example IPU capacity manager 716 of FIG. 7 provides a set of resources to a container orchestration engine (CoE) (e.g., container orchestrator). In this manner, the container orchestration engine can determine whether the set of resources are suitable to host sidecar circuitry. The example IPU capacity manager 716 includes attributes such as an optimized sidecar target label, indicative of an output and memory resources of the IPU, etc. In some examples, the indicative compute and memory resources may appear to the CoE as "regular" CPU compute and memory resources, but could be underpinned differently in an IPU implementation. In this manner, the IPU capacity manager 716 provides a layered view of the IPU capacity in a manner native to the CoE. The combination of the indicative compute and memory resources with a label identifier indicates that the combination of compute and memory are a desired target for the CoE to select this node and to provision one or more sidecar container(s) into the IPU. To enable the deployment of a sidecar via a sidecar deployment pattern, the IPU capacity manager 716 may indicate to the CoE the capacity and capability data that the CoE needs to select the node for provisioning and to make sure that the sidecar is deployed on the IPU 710a. In some examples, the IPU capacity manager 716 supports capacity isolation when multiple service meshes are to be co-located.

The example infrastructure 718 of FIG. 7 is hardware that includes nodes (e.g., individual machines including heterogenous device, switches, entities, etc.) and communication networks between the nodes. The infrastructure 718 communicates with the IPUs 710a-710b across the platforms 702a-702b (e.g., to forward service requests and/or obtain data). Additionally, the infrastructure 718 may execute one or more service requests locally using the nodes of the infrastructure 718. Accordingly, the infrastructure 718 may transmit infrastructure telemetry data corresponding to the execution of a service to the example infrastructure sidecar circuitry 720.

The example infrastructure sidecar circuitry 720 of FIG. 7 includes logic that acts as a global sidecar proxy that obtains information from the IPUs 710a-710d across the platforms 702-702d corresponding to the capability and/or capacity of the edge appliances 704a-704d. The example infrastructure sidecar circuitry 720 obtains service-to-service invocations (e.g., active and/or established service requests from one node to another node) that have been intercepted at the example IPU sidecar circuitry 714 and processes the invocations determine whether to load balance, auto-scale, or do nothing (e.g., keep the service execution at the intended endpoint) based on the real-time telemetry data from all the nodes in the environment 700. The real-time telemetry data includes utilization and response time metrics from the infrastructure telemetry indicative of the processing capacity, response time, and network congestions along route to one or more active instances (e.g., service containers implemented in edge appliances) of the invoked service. The example IPU sidecar circuitry 714 may determine whether to implement a new instance, whether to redirect a determination to an application provided sidecar broker, where to auto-scale, whether to load balance, etc. based on the telemetry data. The example infrastructure sidecar circuitry 720 is further described below in conjunction with FIG. 9.

FIG. 8 is a block diagram of an example implementation of the IPU sidecar circuitry 714 of FIG. 7. The example IPU sidecar circuitry 714 includes example interface(s) 800, an example telemetry processing controller 802, and example intercept circuitry 804. The example of FIG. 8 is described in conjunction with the example IPU 710a. However, the example of FIG. 8 may be used in conjunction with any of the IPUs 710a-710d.

The example interface(s) 800 carry out interaction with the infrastructure 718 to facilitate interaction with the infrastructure 718 and with other services that the hosted sidecar circuitry 712 requires. The example interface(s) 800 may include a first interface that allows application or management middleware to register services running in the local edge applicant 704a. When the edge application 704a capable of performing the service 706 enters (e.g., is deployed in, comes on line, is implemented in, etc.) the platform 702a, the first interface of the interface(s) 800 transmits an identification (e.g., a globally unique identifier) of the service 706 that the edge application 704a is capable of executing. Additionally, the first interface of the interface(s) 800 transmits capacity and response time data corresponding to the service 706 to the example infrastructure 718. The capacity and response time data may include how many request that the service 706 can handle locally, and at what response time. The response time may include average time, maximum time, P99 or P95 levels, and/or may be a vector of values for different fractions of the maximum capacity.

The second interface of the interface(s) 800 of FIG. 8 allows the edge appliance 704a and its components to periodically provide and/or register service telemetry to the example infrastructure 718. The second interface of the interface(s) 800 transmits or causes transmission of (e.g., by instructing one or more components of the IPU 710a) the identification (e.g., the globally unique identifier) of the service 706 that the edge application 704a is capable of executing. Additionally, the second interface of the interface(s) 800 may obtain the application data in a normalized metrics form and transmit or cause transmission of the normalized metrics form to the infrastructure sidecar circuitry 720. The application telemetry may be obtained from the edge appliance 704a (and/or other nodes in the platform 702a) and/or another component that monitors performance of the edge appliance 704a. The normalized metrics form may be a form which the infrastructure sidecar circuitry 720 can access how close to the maximum capacity the service 706 is, and how the response time is trending so that the infrastructure sidecar circuitry 720, etc. In this manner, the example infrastructure sidecar circuitry 720 can determine whether to continue sending invocations to the edge appliance 704a, whether to create a new instance (e.g., service 706) to execute part of the workload, whether to load balance with another edge appliance 704a (e.g., local or peer), and/or whether to scale back the instance (e.g., service 706). The service telemetry may include current (or moving window) arrival rate, estimated head room for accepting new arrivals, load on the current edge appliance 704a, estimated response time for new arrivals, etc. In some examples, the first interface and the second interface of the interfaces(s) 800 may be combined into one or multiple interfaces.

The example telemetry processing controller 802 of FIG. 8 may perform preprocessing of the telemetry data before sending to the infrastructure 718. For example, the telemetry processing controller 802 may obtain the telemetry data from application software (e.g., the edge appliance 704a and/or other edge appliances in the platform 702a) and put the telemetry data into the normalized metrics form. Additionally, the telemetry processing controller 802 may analyze the telemetry data to determine if there is any significant change (e.g., based on one or more thresholds) in the telemetry data. For example, if the telemetry data from the edge appliances in the platform 702a have not changed for a duration of time, the telemetry processing controller 802 may adjust (e.g., decrease) the frequency of sending the telemetry data to the infrastructure (e.g., to conserve resources and bandwidth). If the telemetry data from the edge appliances in the platform 702a have change or are rapidly changing, the telemetry processing controller 802 may adjust (e.g., increase) the frequency of sending the telemetry data to the infrastructure (e.g., to send more live updates corresponding to the changes). Additionally or alternatively, the telemetry processing controller 802 may trigger a transmission of telemetry data when the telemetry data is changing and enter into a transmission sleep mode (e.g., to not transmit or only transmit after a duration of time when the telemetry data has not changed. In such examples, if the telemetry processing controller 802 identifies more than a threshold amount of telemetry, the telemetry processing controller 802 exits the sleep mode to continue to send telemetry data more regularly.

The example intercept circuitry 804 of FIG. 8 intercepts local original requests targeting remote services (e.g., proxied through their corresponding sidecar circuitry). The example intercept circuitry 804 forwards the intercepted request to the example infrastructure sidecar circuitry 720 for a potential "last-inch" scheduling decision based on up-to-date telemetry data. For example, because the telemetry data from all the services are sent to the infrastructure sidecar circuitry 720, the infrastructure sidecar circuitry 720 can determine if load balancing, auto scaling, etc. is needed to ensure that service metrics are being met and/or execution of the service is optimized and/or otherwise improved based on the capacity and capability of all devices across the environment 700.

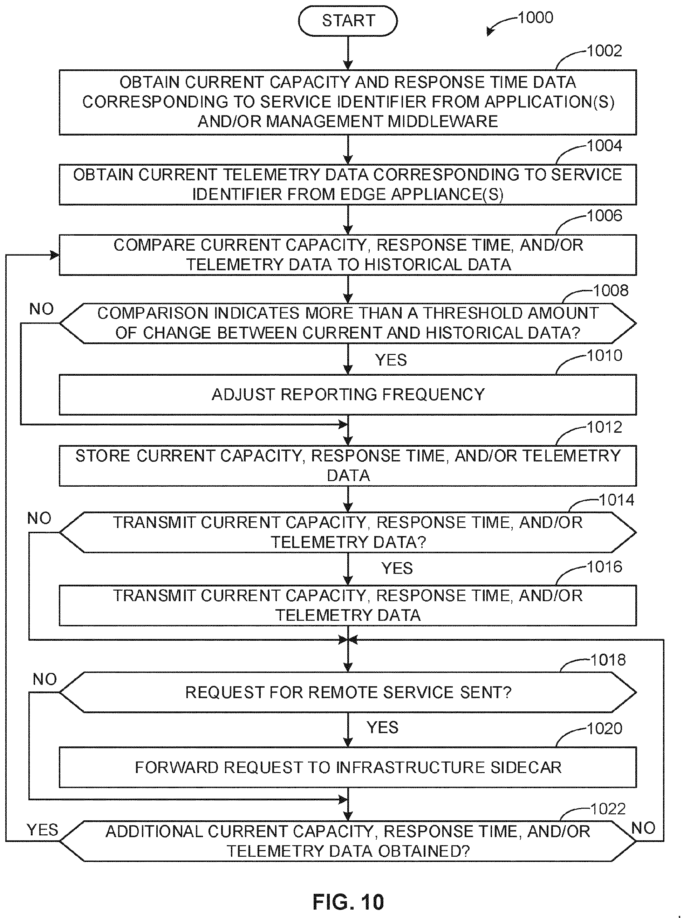

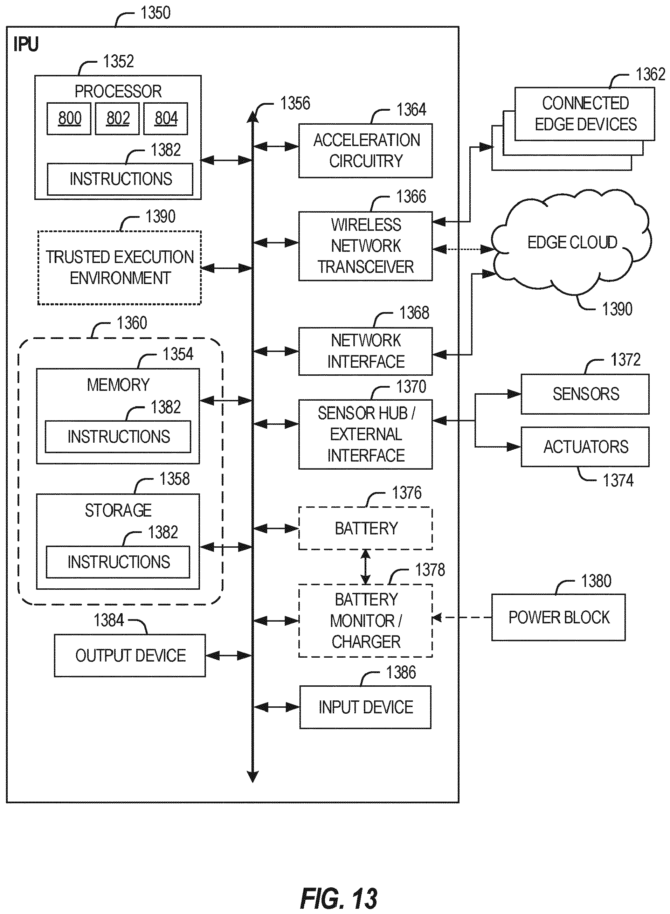

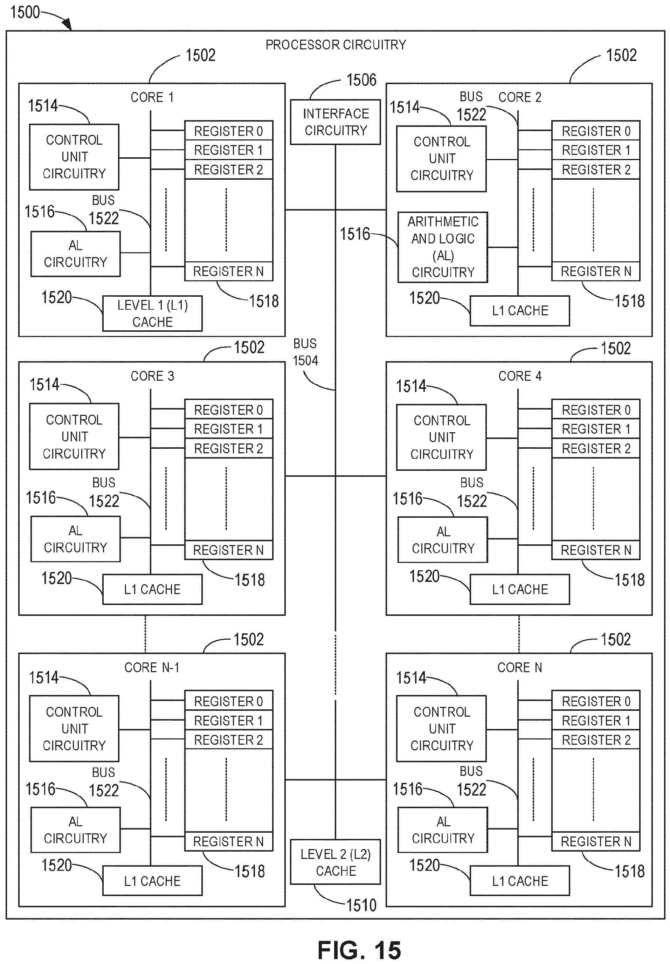

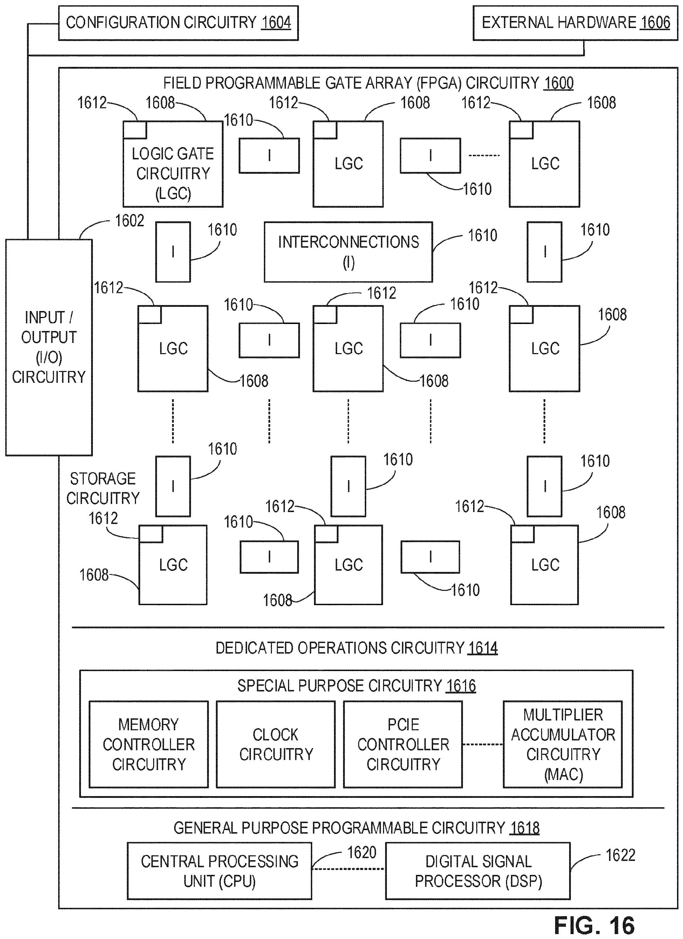

In some examples, the IPU sidecar circuitry 714 includes means for receiving, transmitting, and/or causing transmission of data, means for intercepting service requests, means for processing telemetry data, etc. For example, the means for receiving, transmitting, and/or causing transmission of data may be implemented by the interface(s) 800, the means for processing telemetry data may be implemented by the telemetry processing controller 802, and the means for intercepting service requests may be implemented by the intercept logic circuitry 804. In some examples, the IPU sidecar circuitry 714 may be implemented by machine executable instructions such as that implemented by at least blocks 1002-1022 of FIG. 10 executed by processor circuitry, which may be implemented by the example processor circuitry 1352 of FIG. 13, the example processor circuitry 1500 of FIG. 15, and/or the example Field Programmable Gate Array (FPGA) circuitry 1600 of FIG. 16. In other examples, the interface(s) 800, the telemetry processing controller 802, and/or the intercept logic circuitry 804 is/are implemented by other hardware logic circuitry, hardware implemented state machines, and/or any other combination of hardware, software, and/or firmware. For example, the interface(s) 800, the telemetry processing controller 802, and/or the intercept logic circuitry 804 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

FIG. 9 is a block diagram of an example implementation of the infrastructure sidecar circuitry 720 of FIG. 7. The example infrastructure sidecar circuitry 714 includes example interface(s) 900, an example target endpoint identification circuitry 902, an example comparator 904, an example filter 906, an example brokering controller 908, an example telemetry monitor circuitry 910, an example topology mapping circuitry 912.

The example interface(s) 900 of FIG. 9 obtain(s) data from the IPU sidecar circuitry 714 across the platforms 702a-d. For example, the interface(s) 900 may include a single interface or multiple interfaces for the multiple IPUs 710a-710d (e.g., to register local service that is apprised by the interface(s) 800 of the IPU sidecar circuitry 714 as available at the application appliances 704a-704d or node hosting the services 706, 708). The interface(s) 900 obtain(s) the service identifiers, capacity, response time, Internet Protocol (IP) address or other locator for the edge appliances 704a-704d, and/or telemetry data from IPUs 710a-710d across the platforms 702a-702d.

The example target endpoint identification circuitry 902 of FIG. 9 determines the target endpoint (e.g., appliance, device, etc.) for a service quest from the sidecar service 712 (e.g., for a new service request or service flow) or an intercepted service requested from the IPU sidecar circuitry 714 (e.g., a service request that previously has developed a target endpoint). The example target endpoint identification circuitry 902 determines a target endpoint for the transmission of a service request based on a topology mapping that includes a mapping of the capacity and capability of the services, edge appliances, devices, nodes, infrastructure devices, etc., in the environment 700. In this manner, the target endpoint identification circuitry 902 can identify target endpoint to schedule the service request by developing new endpoints to service a new request, load balancing and/or scaling based on already established requested, etc. The example target endpoint identification circuitry 902 includes an example comparator 904 to compare telemetry data to service metrics to determine whether the service metrics are/can be met at using target endpoints based on the corresponding telemetry data. Additionally, the example target endpoint identification circuitry 902 includes an example filter 906 to filter out endpoints that are not capable or have capacity to service an incoming or intercepted request. In this manner, the target endpoint identification circuitry 902 can select a target endpoint from a group of target endpoints that are capable of servicing a request while meeting the service metrics (e.g., latency, response time, efficiency, etc.). Additionally, the example target endpoint identification circuitry 902 acts as a failsafe to validate endpoint assignments from the brokering controller 908. For example, the target endpoint identification circuitry 902 checks whether the endpoint assignment is feasible under current conditions and/or whether the endpoint assignment will result in an error.

The example brokering controller 908 of FIG. 9 handles service requests that requires non-default load balancing and/or other scheduling. For example is a service owner wishes to apply more complex objectives (e.g., associated with cost, staying within a contract, and/or any other criteria that may override the default scheduling protocol) when scheduling a service request of a flow of service requests. Accordingly, in such examples, an indication that service corresponds to a non-default load balancing protocol may be identified (e.g., based on the global identifier, the service request itself, etc.) and the service request may be transmitted to the example brokering controller 908 to develop scheduling for the service request and/or a flow of service requests based on the non-default protocol. The brokering controller 908 obtains the topology mapping from the telemetry monitor circuitry 910 including the corresponding telemetry data to schedule the service request(s) to conform to the non-default protocol.

The example telemetry monitor circuitry 910 of FIG. 9 monitors the telemetry data for devices across the environment 700 based on obtained telemetry data. The example telemetry monitor circuitry 910 transmits or causes transmission of updates to the telemetry data to the example topology mapping circuitry 912 to include the most up-to-date telemetry data for devices in a topology map. In this manner, the target endpoint identification circuitry 902 and/or the brokering controller 908 can make scheduling decisions based on the topology of devices and their corresponding capability and capacity. In some examples, the telemetry monitor circuitry 910 obtains network telemetry data (e.g., from one or more devices in the environment 700) corresponding to telemetry data related to communications within the environment 700. For example, the telemetry monitor circuitry 910 may obtain latency and/or bandwidth information corresponding to communications between any two or more devices within the environment 700.

The example topology mapping circuitry 912 generates and maintains a topology map that identifies all services, devices, service instances, endpoints, etc. within the environment 700. For example, using the example of FIG. 7, the topology mapping circuitry 912 maps the edge appliance 704a to the service 706 and the platform 702a/IPU 710a, the edge appliance 704b to the service 706 and the platform 702b/IPU 710b, etc. Additionally, the topology mapping circuitry 912 may map devices and/or services being executed at the infrastructure 718. Additionally, the topology mapping circuitry 912 includes the current telemetry data corresponding to each of the endpoint devices and/or services. The topology mapping circuitry 912 updates the topology as the topology updates (e.g., generation of new services, endpoints, decommission of old/unused services/devices, change in load balancing/where a service is executed, etc.).

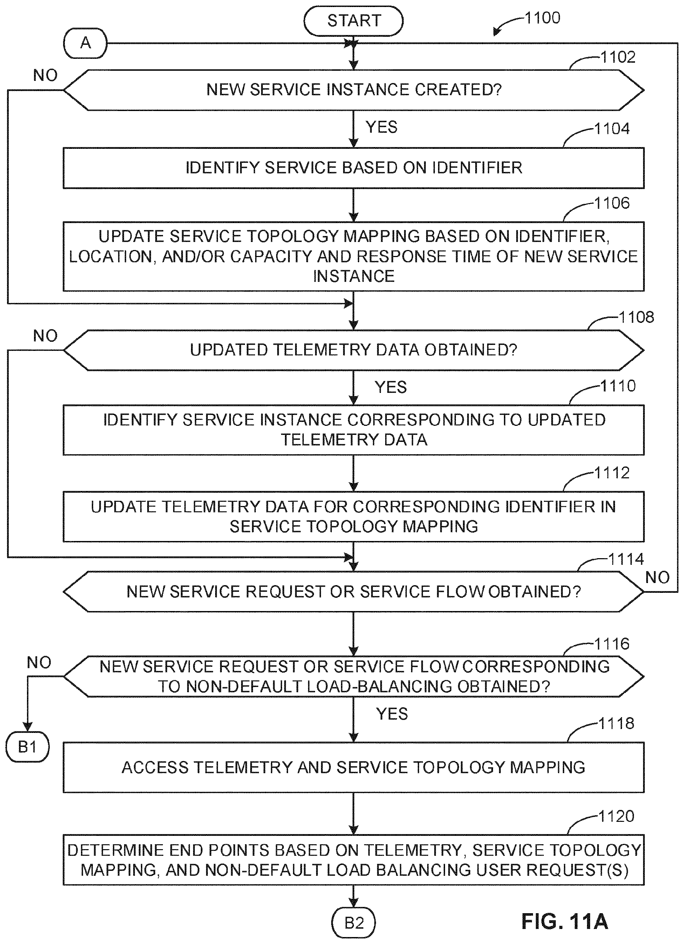

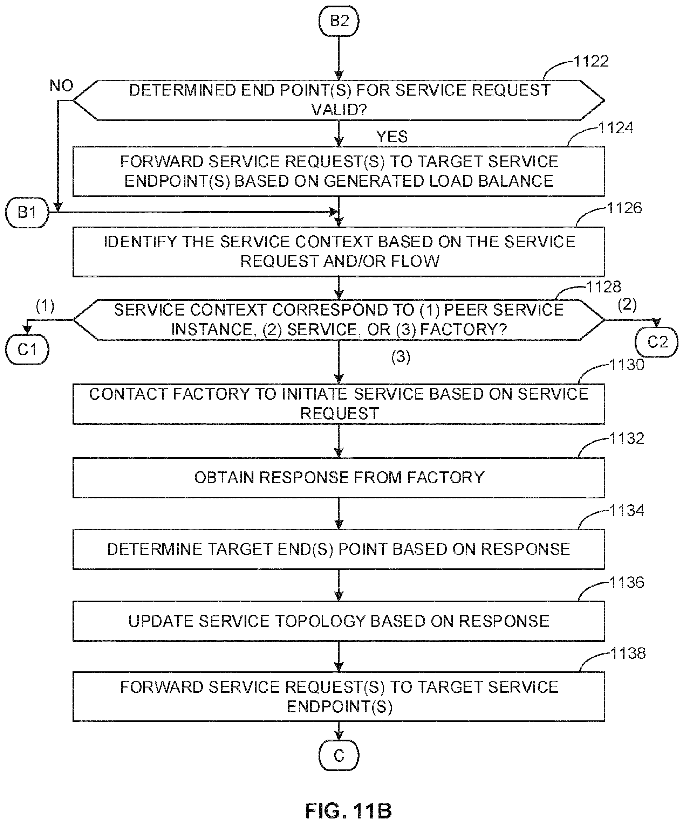

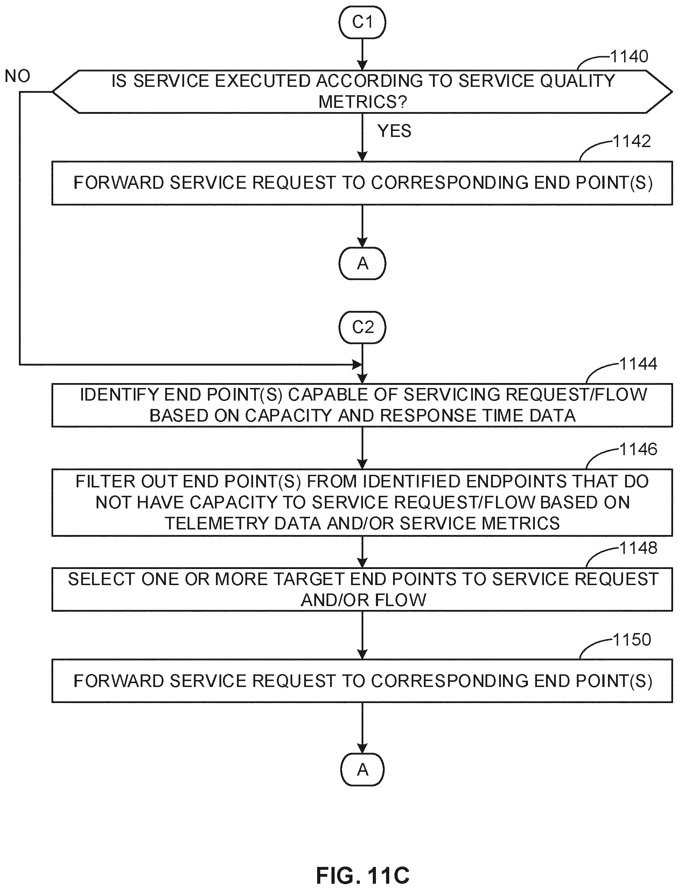

In some examples, the infrastructure sidecar circuitry 720 includes means for transmitting and/or receipting data (e.g., intercepted service requests, telemetry data, etc.), means for identifying a target endpoint, means for handling service requests that requires non-default load balancing and/or other scheduling, means for monitoring telemetry data, and means for mapping a topology. For example, the means for receiving, transmitting and/or causing transmission of data may be implemented by means for transmitting and/or receipting data (e.g., intercepted service requests, telemetry data, etc.) may be implemented by the interface(s) 900, the means for identifying a target endpoint may be implemented by the target endpoint identification circuitry 902, the means for handling service requests that requires non-default load balancing and/or other scheduling may be implemented by the brokering controller 908, the means for monitoring telemetry data may be implemented by the telemetry monitoring circuitry 910, and the means for mapping a topology may be implemented by the topology mapping circuitry 912. In some examples, the IPU sidecar circuitry 714 may be implemented by machine executable instructions such as that implemented by at least blocks 1102-1150 of FIG. 11 executed by processor circuitry, which may be implemented by the example processor circuitry 1452 of FIG. 14, the example processor circuitry 1500 of FIG. 15, and/or the example Field Programmable Gate Array (FPGA) circuitry 1600 of FIG. 16. In other examples, the interface(s) 900, the example target endpoint identification circuitry 902, the example brokering controller 908, the example telemetry monitor circuit 910, and/or the example topology mapping circuitry 912 is/are implemented by other hardware logic circuitry, hardware implemented state machines, and/or any other combination of hardware, software, and/or firmware. For example, the interface(s) 900, the example target endpoint identification circuitry 902, the example brokering controller 908, the example telemetry monitor circuit 910, and/or the example topology mapping circuitry 912 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

While an example manner of implementing the example IPU sidecar circuitry 714 and/or the example infrastructure sidecar circuitry 720 of FIG. 7 is illustrated in FIGS. 8 and 9, one or more of the elements, processes and/or devices illustrated in FIGS. 8 and/or 9 may be combined, divided, re-arranged, omitted, eliminated and/or implemented in any other way. Further, the example interface(s) 800, the example telemetry processing controller 802, the example intercept circuitry 804, and/or, more generally the example IPU sidecar circuitry 714 of FIG. 8 and/or the example interface(s) 900, an example target endpoint identification circuitry 902, the example comparator 904, the example filter 906, the example brokering controller 908, the example telemetry monitor circuitry 910, the example topology mapping circuitry 912, and/or, more generally, the example infrastructure sidecar circuitry 720 of FIG. 9 may be implemented by hardware, software, firmware and/or any combination of hardware, software and/or firmware. Thus, for example, any of the example interface(s) 800, the example telemetry processing controller 802, the example intercept circuitry 804, and/or, more generally the example IPU sidecar circuitry 714 of FIG. 8 and/or the example interface(s) 900, an example target endpoint identification circuitry 902, the example comparator 904, the example filter 906, the example brokering controller 908, the example telemetry monitor circuitry 910, the example topology mapping circuitry 912, and/or, more generally, the example infrastructure sidecar circuitry 720 of FIG. 9 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example, the example interface(s) 800, the example telemetry processing controller 802, the example intercept circuitry 804, and/or, more generally the example IPU sidecar circuitry 714 of FIG. 8 and/or the example interface(s) 900, an example target endpoint identification circuitry 902, the example comparator 904, the example filter 906, the example brokering controller 908, the example telemetry monitor circuitry 910, the example topology mapping circuitry 912, and/or, more generally, the example infrastructure sidecar circuitry 720 of FIG. 9 is/are hereby expressly defined to include a non-transitory computer readable storage device or storage disk such as a memory, a digital versatile disk (DVD), a compact disk (CD), a Blu-ray disk, etc. including the software and/or firmware. Further still, the example IPU sidecar circuitry 714 and/or the example infrastructure sidecar circuitry 720 of FIGS. 8 and/or 9 may include one or more elements, processes and/or devices in addition to, or instead of, those illustrated in FIGS. 8 and/or 9, and/or may include more than one of any or all of the illustrated elements, processes, and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

Flowcharts representative of example hardware logic, machine readable instructions, hardware implemented state machines, and/or any combination thereof for implementing the example IPU sidecar circuitry 714 and/or the example infrastructure sidecar circuitry 720 of FIGS. 8 and/or 9 are shown in FIGS. 10-11C. The machine readable instructions may be one or more executable programs or portion(s) of one or more executable programs for execution by a computer processor such as the processor 1352, 1452 shown in the example processor platform 1350, 1450 discussed below in connection with FIGS. 13 and/or 14. The programs may be embodied in software stored on a non-transitory computer readable storage medium such as a CD-ROM, a floppy disk, a hard drive, a DVD, a Blu-ray disk, or a memory associated with the processor 1352, 1452 but the entirety of the programs and/or parts thereof could alternatively be executed by a device other than the processor 1352, 1452 and/or embodied in firmware or dedicated hardware. Further, although the example program(s) is/are described with reference to the flowcharts illustrated in FIGS. 10-11C, many other methods of implementing the example IPU sidecar circuitry 714 and/or the example infrastructure sidecar circuitry 720 of FIGS. 8 and/or 9 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein.

In another example, the machine readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example programs of FIGS. 11-13 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 10 illustrates a flowchart representative of example machine readable instructions 1000 that may be executed to implement the example IPU sidecar circuitry 714 (FIG. 7) to collect and transmit telemetry data to the example infrastructure 718 of FIG. 7. Although the flowchart of FIG. 10 is described in conjunction with the IPU sidecar circuitry 714 of FIG. 7, the example instructions may be used to implement other type(s) of sidecar circuitry(ies).

At block 1002, the example interface(s) 800 obtains current capacity and response time data corresponding to the service identifier from application(s) executed on the edge appliance(s) (e.g., edge appliance 704a) and/or management middleware. In some examples, the interface(s) 800 only obtains the capacity and response time data when a service and/or a device becomes available or if there is a change in the capacity and/or response time. At block 1004, the example interface(s) 800 obtain(s) current telemetry data corresponding to the edge appliances in the corresponding platform. In some examples, the interface(s) 80 obtain(s) the current telemetry data from a device that monitors the operation of the edge appliance sin the corresponding platform.

At block 1006, the example telemetry processing controller 802 compares the current capacity, resources, and/or telemetry data for the edge appliances of the platform to corresponding historical data (e.g., one or more previous capacity, response time, and/or telemetry data) of the edge appliances of the platform. At block 1008, the example telemetry processing controller 802 determines if the comparison indicates more than a threshold amount of change between the current and the historical data.

If the example telemetry processing controller 802 determines that more than a threshold amount of change did not occurred (block 1008: NO), the instructions continue to block 1012. If the example telemetry processing controller 802 determines that more than a threshold amount of change occurred (block 1008: YES), the example telemetry processing controller 802 adjust the reporting frequency (e.g., the frequency at which the interface(s) 800 transmits and/or causes transmission of the telemetry data to the example infrastructure 718 (block 1010). For example, if the telemetry data corresponds to a lot of change, the transmission frequency may be increased to ensure the infrastructure has up-to-date telemetry data for making scheduling decisions. If the telemetry data corresponds to little or no change, the transmission frequency may be deceased to conserve resources. In some examples, the telemetry processing controller 802 may decide to only send telemetry data when the comparison results is more than a threshold amount of change between the current and the historical data.

At block 1012, the example telemetry processing controller 802 stores the current capacity, response time, and/or telemetry data for future comparisons (e.g., the current capacity, response time, and/or telemetry data becomes historical data to compare in updated current data in an upcoming point in time). The telemetry processing controller 802 may store the current data in memory (e.g., local memory, volatile memory, non-volatile memory, the example memory 1354 of FIG. 13, and/or the example storage 1358 of FIG. 13). At block 1104, the example telemetry processing controller 802 determines whether to transmit the current capacity, response time, and/or telemetry data to the infrastructure 118. As described above, the telemetry processing controller 802 may determine whether to transmit the telemetry data or wait for a later point in time based on the comparison of the current data to historical data.

If the example telemetry processing controller 802 determines it is not time to transmit the current capacity, response time, and/or telemetry data (block 1014: NO), control continues to block 1018. If the example telemetry processing controller 802 determines that it is time to transmits the current capacity, response time, and/or telemetry data (block 1014: YES), the example interface(s) 800 transmit(s) and/or cause(s) transmission of the current capacity, response time, and/or telemetry data (e.g., including a corresponding service identifier) to the example infrastructure sidecar circuitry 720 of the infrastructure 718 (block 1016).

At block 1018, the example interface(s) 800 determine(s) whether a request for a remote service has been sent from one of the edge appliances in the same platform as the IPU sidecar circuitry 714. If the example interface(s) 800 determine(s) that a request for a remote service has not been sent (block 1018: NO), control continues to block 1022. If the example interface(s) 800 determine(s) that a request for a remote service has been sent (block 1018: YES), the example interface(s) 800 intercept(s) the request and forward(s) the intercepted request to the infrastructure sidecar circuitry 720 (block 1020).

At block 1022, the example telemetry processing controller 802 determines if there additional current capacity, response time, and/or telemetry data has obtained from the edge appliances in the platform. In some examples, the telemetry data corresponds to communications between two or more devices withing the environment 700 (e.g., latency data, bandwidth, etc. between an originating device and candidates nodes). If the example telemetry processing controller 802 determines that there no additional (e.g., updated) current capacity, response time, and/or telemetry data that has been obtained (block 1022: NO), control returns to block 1018 until a new service request is intercepted or additional current capacity, response time, and/or telemetry data is obtained. If the example telemetry processing controller 802 determines that there is additional (e.g., updated) current capacity, response time, and/or telemetry data that has been obtained (block 1022: YES), control returns to block 1006 to compare the updated current capacity, response time, and/or telemetry data to historical data.

FIGS. 11A-11C illustrate a flowchart representative of example machine readable instructions 1100 that may be executed to implement the example infrastructure sidecar circuitry 720 (FIG. 7) to manage quality service metrics across edge platforms based on data from the edge platforms. Although the flowchart of FIGS. 11A-11C is described in conjunction with the infrastructure sidecar circuitry 720 in the example environment 700 of FIG. 7, the example instructions may be used to implement other type(s) of sidecar circuitry(ies) in any environment.

At block 1102, the topology mapping circuitry 912 determines if a new service instance was created in the environment 700. For example, the topology mapping circuitry 912 may determine that a new service instance was created when the interface(s) 900 obtains data from one or more of the IPUs 710a-710d across the platforms(s) 702a-702d that indicate that a new service instance was created and/or implemented by an existing or a new edge application. If the example topology mapping circuitry 912 determines that a new service instance was not created (block 1102: NO), control continues to block 1108. If the example topology mapping circuitry 912 determines that a new service instance was created (block 1102: YES), the example topology mapping circuitry 912 identifies the service based on an identifier, from the obtained data, corresponding to the service instance (block 1104).

At block 1106, the example topology mapping circuitry 912 updates the service topology mapping based on the identifier, a location, and/or the capacity and/or response time of the new service instance. At block 1108, the example telemetry monitor circuitry 910 determines if new telemetry data has been obtained from any of the IPUs 710a-710d via the example interface(s) 900. As described above, the IPUs 710a-710b may transmit and/or cause transmission of updated telemetry data corresponding to one or more edge appliances operating in a corresponding platform. Additionally or alternatively, the telemetry data may be related to network information (e.g., bandwidth, latency, etc. related to communications between two or more devices in the environment 700). If the example telemetry monitor circuitry 910 determines that new telemetry data has not been obtained (block 1008: NO), control continues to block 1114. If the example telemetry monitor circuitry 910 determines that new telemetry data has been obtained (block 1008: YES), the example telemetry monitor circuitry 910 identifies the service instance corresponding to the updated telemetry data (e.g., based on an identifier included in the obtained telemetry data) (block 1110). At block 1112, the example topology mapping circuitry 912 updates the telemetry data and/or network telemetry data for the corresponding identifier in the service topology mapping. In this manner, the topology mapping, that includes a mapping of every service instance has up-to-date telemetry data and/or network telemetry data for the infrastructure sidecar circuitry to make live and/or last minute scheduling of services.

At block 1114, the example target endpoint identification circuitry 902 determines if a new service request or service flow has been obtained via the interface(s) 900. The service request or service flow may be a new request or an already established intercepted request. If the example target endpoint identification circuitry 902 determines that a new service request or service flow has not been obtained (block 1114: NO), control returns to block 1102. If the example target endpoint identification circuitry 902 determines that a new service request or service flow has been obtained (block 1114: YES), the example target endpoint identification circuitry 902 determines if the new service request or service flow corresponds to a non-default load-balancing (block 1116). As described above, a service owner may desire a non-default load balancing for a service request or a service flow. Accordingly, the service request and/or service flow may identify and/or the service corresponding to the service request or service flow the non-default load balancing protocol. When the target endpoint identification circuitry 902 determines that the service request/flow corresponds to a non-default load balancing protocol, the target endpoint identification circuitry 902 passes the request over to the brokering controller 908.

If the example target endpoint identification circuitry 902 determines that a new service request or service flow corresponding to the non-default load-balancing was not obtained (block 1116: NO), control continues to block 1126 of FIG. 11B. If the example endpoint identification circuitry 902 determines that a new service request or service flow corresponding to the non-default load-balancing was obtained (block 116: YES), the example brokering controller 908 accesses the telemetry data, network telemetry data, and service topology mapping (e.g., generated and updated by the topology mapping circuitry 912). At block 1120, the example brokering controller 908 determines endpoint(s) (e.g., devices, edge appliances, nodes, etc.) to service the request and/or flow based on the telemetry, network telemetry, service topology mapping, and non-default load user request(s). For example, the brokering controller 908 attempts to find edge appliances and/or devices that are capable and have capacity to service the request(s) according to the non-default load balancing request from the service owner.

At block 1122, the example target endpoint identification circuitry 902 attempts to validate the determined endpoint(s) (e.g., for load balancing) selected by the example brokering controller 908. For example, the target endpoint identification circuitry 902 determines if the selected endpoints for the brokering controller 908 will result in an error, overuse or endpoints, underuse of endpoints, etc. If the example target endpoint identification circuitry 902 determines that the determined endpoint(s) selected to service the request is not valid (block 122: NO), control continues to block 1126. If the example target endpoint identification circuitry 902 determines that the determined endpoint(s) selected to service the request is valid (block 1122: YES), the example interface(s) 900 forward the service request(s) to the target service endpoint(s) based on the load balance generated by the brokering controller 908 (block 1124).

At block 1128, the example target endpoint identification circuitry 902 identifies the service context based on the service request or flow. For example, the service request may correspond to a peer service instance (e.g., an active or established service instance), a service, or a factory. A peer service instance corresponds to a service that has already been linked to one or more endpoint(s). A service is a new service request that has not been linked with a service instance. A factory is a service request that corresponds to a service instance that is available across the platforms. If the example target endpoint identification circuitry 902 determines that the service context corresponds to a peer instance (block 1128: 1), control continues to block 1140 of FIG. 11C. If the example target endpoint identification circuitry 902 determines that the service context corresponds to a service (block 1128: 2), control continues to block 1144 of FIG. 11C. If the example target endpoint identification circuitry 902 determines that the service context corresponds to a factory (block 1128: 3), the example contacts a factory at a platform to initiate a service based on the service request (block 1130).

At block 1132, the example target endpoint identification circuitry 902 obtains a response from the factory (e.g., including data identifying the new generated service instance capable of handling the service request). At block 1134 the example target endpoint identification circuitry 902 determines the target endpoint(s) based on the response. At block 1136, the example topology mapping circuitry 912 update the service topology mapping based on the response (e.g., identifying the new service instances and corresponding capacity and/or response time). At block 1138, the example interface(s) 900 forwards the service request(s) and/or flow to the target service endpoint(s).

If the example target endpoint identification circuitry 902 determines that the service context corresponds to a factory (block 1128: 1), the example comparator 904 of the target endpoint identification circuitry 902 compares the telemetry data corresponding to the service instance associated with the service request to the service quality metrics associated with the service request to verify whether the service is executed according to the service quality metrics (block 1140). If the example comparator 904 determines that the service is not being executed according to the service quality metrics (block 1140: NO), control continues to block 1144 to perform auto-scaling and/or load balancing to ensure that the service quality metrics are met. If the example comparator 904 determines that the service is being executed according to the service quality metrics (block 1140: YES), the example interface(s) 900 forward(s) the service request to the corresponding endpoint(s) (e.g., the endpoints that have previously been selected to service the request and/or flow) (block 1142) and control returns to block 1102.

If the example target endpoint identification circuitry 902 determines that the service context corresponds to a factory (block 1128: 2), the example target endpoint identification circuitry 902 identifies endpoint(s) capable of serving the request/flow based on the capacity and/or response time data of the service instances across the platforms 702a-702d (block 1144). At block 1146, the example filter 906 of the example target endpoint identification circuitry 902 filters out endpoint(s) from the identified endpoints that do not have capacity to service the request/flow based on telemetry data and/or the service metrics. For example, the filter 906 filters out endpoint(s) that are capable of servicing the request but do not have the capacity to service the request according to the service metrics. The target endpoint identification circuitry 902 may make the determination that the endpoint(s) do not have capacity based on the telemetry data of the endpoint(s) and the service metrics that set the thresholds corresponding to latency, efficiency, overhead, etc. In some examples, if there are no or limited endpoint(s) available after the filtering, the target endpoint identifier may auto-scale by commissioning new endpoint(s) and/or devices at the infrastructure 718 and/or at one or more platforms to add more resources to execute the service request. In some examples, if the telemetry data indicates that one or more endpoint(s) are not being utilized (e.g., within a threshold amount of time), the example target endpoint identifier may facilitate the decommission of one or more endpoints. At block 1148, the example target endpoint identification circuitry 902 selects one or more target endpoints to service the request and/or flow. At block 1150, the example target endpoint identification circuitry 902 forwards the service request to the corresponding endpoint(s) and control returns to block 1102.

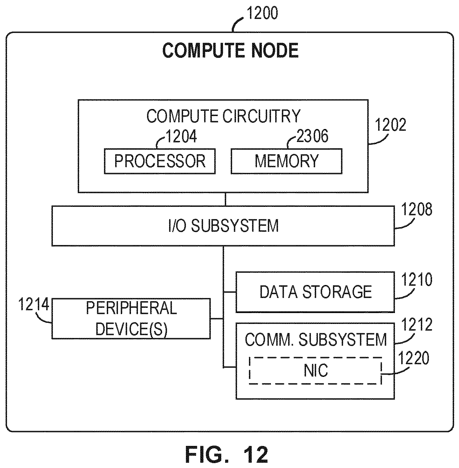

FIG. 12 is a block diagram of an example implementation of an example edge compute node 1200 that includes a compute engine (also referred to herein as "compute circuitry") 1202, an input/output (I/O) subsystem 1208, data storage 1210, a communication circuitry subsystem 1212, and, optionally, one or more peripheral devices 1214. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component. The example edge compute node 1200 of FIG. 12 may be deployed in one of the edge computing systems illustrated in FIGS. 1-4 and/or 6-10C to implement any edge compute node of FIGS. 1-4 and/or 6-10C. The example edge compute node 1200 may additionally or alternatively include any of the components of the edge appliances 704a-704d of FIG. 7.

The example compute node 1200 may be embodied as any type of engine, device, or collection of devices capable of performing various compute functions. In some examples, the compute node 1200 may be embodied as a single device such as an integrated circuit, an embedded system, a field-programmable gate array (FPGA), a system-on-a-chip (SOC), or other integrated system or device. In the illustrative example, the compute node 1200 includes or is embodied as a processor 1204 and a memory 1206. The example processor 1204 may be embodied as any type of processor capable of performing the functions described herein (e.g., executing an application). For example, the processor 1204 may be embodied as a multi-core processor(s), a microcontroller, a processing unit, a specialized or special purpose processing unit, or other processor or processing/controlling circuit.

In some examples, the processor 1204 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 1204 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing, or managing server or data center hardware, managing service meshes, or collecting and distributing telemetry), outside of the CPU and/or GPU or general purpose processing hardware. However, it will be understood that a xPU, a SOC, a CPU, a GPU, and other variations of the processor 1204 may work in coordination with each other to execute many types of operations and instructions within and on behalf of the compute node 1200.

The example memory 1206 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device 1206 is a block addressable memory device, such as those based on NAND or NOR technologies. A memory device 1206 may also include a three dimensional crosspoint memory device (e.g., Intel^{®} 3D XPoint^{™} memory), or other byte addressable write-in-place nonvolatile memory devices. The memory device 1206 may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 1206 may be integrated into the processor 1204. The memory 1206 may store various software and data used during operation such as one or more applications, data operated on by the application(s), libraries, and drivers.

The example compute circuitry 1202 is communicatively coupled to other components of the compute node 1200 via the I/O subsystem 1208, which may be embodied as circuitry and/or components to facilitate input/output operations with the compute circuitry 1202 (e.g., with the processor 1204 and/or the main memory 1206) and other components of the compute circuitry 1202. For example, the I/O subsystem 1208 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 1208 may form a portion of a system-on-a-chip (SoC) and be incorporated, along with one or more of the processor 1204, the memory 1206, and other components of the compute circuitry 1202, into the compute circuitry 1202.

The one or more illustrative data storage devices 1210 may be embodied as any type of devices configured for short-term or long-term storage of data such as, for example, memory devices and circuits, memory cards, hard disk drives, solid-state drives, or other data storage devices. Individual data storage devices 1210 may include a system partition that stores data and firmware code for the data storage device 1210. Individual data storage devices 1210 may also include one or more operating system partitions that store data files and executables for operating systems depending on, for example, the type of compute node 1200.

The example communication circuitry 1212 may be embodied as any communication circuit, device, or collection thereof, capable of enabling communications over a network between the compute circuitry 1202 and another compute device (e.g., an edge gateway of an implementing edge computing system). The example communication circuitry 1212 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 1212 includes a network interface controller (NIC) 1220, which may also be referred to as a host fabric interface (HFI). The example NIC 1220 may be embodied as one or more add-in-boards, daughter cards, network interface cards, controller chips, chipsets, or other devices that may be used by the compute node 1200 to connect with another compute device (e.g., an edge gateway node). In some examples, the NIC 1220 may be embodied as part of a system-on-a-chip (SoC) that includes one or more processors, or included on a multichip package that also contains one or more processors. In some examples, the NIC 1220 may include a local processor (not shown) and/or a local memory (not shown) that are both local to the NIC 1220. In such examples, the local processor of the NIC 1220 may be capable of performing one or more of the functions of the compute circuitry 1202 described herein. Additionally, or alternatively, in such examples, the local memory of the NIC 1220 may be integrated into one or more components of the client compute node at the board level, socket level, chip level, and/or other levels.

Additionally, in some examples, a respective compute node 1200 may include one or more peripheral devices 1214. Such peripheral devices 1214 may include any type of peripheral device found in a compute device or server such as audio input devices, a display, other input/output devices, interface devices, and/or other peripheral devices, depending on the particular type of the compute node 1200. In further examples, the compute node 1200 may be embodied by a respective edge compute node (whether a client, gateway, or aggregation node) in an edge computing system or like forms of appliances, computers, subsystems, circuitry, or other components.

FIG. 13 illustrates a block diagram of an example may computing device 1350 structured to execute the instructions of FIG. 10 to implement the techniques (e.g., operations, processes, methods, and methodologies) described herein such as one of the IPU 710-710d of FIGS. 7 and/or 8. This computing device 1350 provides a closer view of the respective components of node 1300 when implemented as or as part of a computing device (e.g., as a mobile device, a base station, server, gateway, etc.). The computing device 1350 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the computing device 1350, or as components otherwise incorporated within a chassis of a larger system. For example, the computing device 1350 can be, for example, a server, a personal computer, a workstation, a self-learning machine (e.g., a neural network), a mobile device (e.g., a cell phone, a smart phone, a tablet such as an iPadTM), a personal digital assistant (PDA), an Internet appliance, a DVD player, a CD player, a digital video recorder, a Blu-ray player, a gaming console, a personal video recorder, a set top box, a headset or other wearable device, an Internet of Things (IoT) device, or any other type of computing device.

The edge computing device 1350 may include processing circuitry in the form of a processor 1352, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 1352 may be a part of a system on a chip (SoC) in which the processor 1352 and other components are formed into a single integrated circuit, or a single package, such as the Edison^{™} or Galileo^{™} SoC boards from Intel Corporation, Santa Clara, California. As an example, the processor 1352 may include an Intel^{®} Architecture Core^{™} based CPU processor, such as a Quark^{™}, an Atom^{™}, an i3, an i5, an i14, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd., or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 1352 and accompanying circuitry may be provided in a single socket form factor, multiple socket form factor, or a variety of other formats, including in limited hardware configurations or configurations that include fewer than all elements shown in FIG. 13. In this example, the processor implements the example IPU sidecar circuitry 714, including the example interface(s) 800, the example telemetry processing controller 802, and/or the example intercept circuitry 804 of FIG. 8.

The processor 1352 may communicate with a system memory 1354 over an interconnect 1356 (e.g., a bus). Any number of memory devices may be used to provide for a given amount of system memory. As examples, the memory 1354 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD149F for DDR SDRAM, JESD149-2F for DDR2 SDRAM, JESD149-3F for DDR3 SDRAM, JESD149-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q114P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 1358 may also couple to the processor 1352 via the interconnect 1356. In an example, the storage 1358 may be implemented via a solid-state disk drive (SSDD). Other devices that may be used for the storage 1358 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 1358 may be on-die memory or registers associated with the processor 1352. However, in some examples, the storage 1358 may be implemented using a micro hard disk drive (HDD). Further, any number of new technologies may be used for the storage 1358 in addition to, or instead of, the technologies described, such resistance change memories, phase change memories, holographic memories, or chemical memories, among others.

The components may communicate over the interconnect 1356. The interconnect 1356 may include any number of technologies, including industry standard architecture (ISA), extended ISA (EISA), peripheral component interconnect (PCI), peripheral component interconnect extended (PCIx), PCI express (PCIe), or any number of other technologies. The interconnect 1356 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 1356 may couple the processor 1352 to a transceiver 1366, for communications with the connected edge devices 1362. The transceiver 1366 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 1362. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 1366 (or multiple transceivers) may communicate using multiple standards or radios for communications at a different range. For example, the computing device 1350 may communicate with close devices, e.g., within about 10 meters, using a local transceiver based on Bluetooth Low Energy (BLE), or another low power radio, to save power. More distant connected edge devices 1362, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 1366 (e.g., a radio transceiver) may be included to communicate with devices or services in the edge cloud 1395 via local or wide area network protocols. The wireless network transceiver 1366 may be a low-power wide-area (LPWA) transceiver that follows the IEEE 802.15.4, or IEEE 802.15.4g standards, among others. The computing device 1350 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 1366, as described herein. For example, the transceiver 1366 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 1366 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 1368 may be included to provide a wired communication to nodes of the edge cloud 1395 or to other devices, such as the connected edge devices 1362 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 1368 may be included to enable connecting to a second network, for example, a first NIC 1368 providing communications to the cloud over Ethernet, and a second NIC 1368 providing communications to other devices over another type of network.

Given the variety of types of applicable communications from the device to another component or network, applicable communications circuitry used by the device may include or be embodied by any one or more of components 1364, 1366, 1368, or 1370. Accordingly, in various examples, applicable means for communicating (e.g., receiving, transmitting, causing transmission, etc.) may be embodied by such communications circuitry.

The computing device 1350 may include or be coupled to acceleration circuitry 1364, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 1356 may couple the processor 1352 to a sensor hub or external interface 1370 that is used to connect additional devices or subsystems. The devices may include sensors 1372, such as accelerometers, level sensors, flow sensors, optical light sensors, camera sensors, temperature sensors, global navigation system (e.g., GPS) sensors, pressure sensors, barometric pressure sensors, and the like. The hub or interface 1370 further may be used to connect the computing device 1350 to actuators 1374, such as power switches, valve actuators, an audible sound generator, a visual warning device, and the like.

In some optional examples, various input/output (I/O) devices may be present within or connected to, the computing device 1350. For example, a display or other output device 1384 may be included to show information, such as sensor readings or actuator position. An input device 1386, such as a touch screen or keypad may be included to accept input. An output device 1384 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the computing device 1350. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 1376 may power the computing device 1350, although, in examples in which the computing device 1350 is mounted in a fixed location, it may have a power supply coupled to an electrical grid, or the battery may be used as a backup or for temporary capabilities. The battery 1376 may be a lithium ion battery, or a metal-air battery, such as a zinc-air battery, an aluminum-air battery, a lithium-air battery, and the like.

A battery monitor/charger 1378 may be included in the computing device 1350 to track the state of charge (SoCh) of the battery 1376, if included. The battery monitor/charger 1378 may be used to monitor other parameters of the battery 1376 to provide failure predictions, such as the state of health (SoH) and the state of function (SoF) of the battery 1376. The battery monitor/charger 1378 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 1378 may communicate the information on the battery 1376 to the processor 1352 over the interconnect 1356. The battery monitor/charger 1378 may also include an analog-to-digital (ADC) converter that enables the processor 1352 to directly monitor the voltage of the battery 1376 or the current flow from the battery 1376. The battery parameters may be used to determine actions that the computing device 1350 may perform, such as transmission frequency, mesh network operation, sensing frequency, and the like.

A power block 1380, or other power supply coupled to a grid, may be coupled with the battery monitor/charger 1378 to charge the battery 1376. In some examples, the power block 1380 may be replaced with a wireless power receiver to obtain the power wirelessly, for example, through a loop antenna in the computing device 1350. A wireless battery charging circuit, such as an LTC4020 chip from Linear Technologies of Milpitas, California, among others, may be included in the battery monitor/charger 1378. The specific charging circuits may be selected based on the size of the battery 1376, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 1358 may include instructions 1382 in the form of software, firmware, or hardware commands to implement the techniques described herein. Although such instructions 1382 are shown as code blocks included in the memory 1354 and the storage 1358, it may be understood that any of the code blocks may be replaced with hardwired circuits, for example, built into an application specific integrated circuit (ASIC).

In an example, the instructions 1382 provided via the memory 1354, the storage 1358, or the processor 1352 may be embodied as a non-transitory, machine-readable medium 1360 including code to direct the processor 1352 to perform electronic operations in the computing device 1350. The processor 1352 may access the non-transitory, machine-readable medium 1360 over the interconnect 1356. For example, the non-transitory, machine-readable medium 1360 may be embodied by devices described for the storage 1358 or may include specific storage units such as optical disks, flash drives, or any number of other hardware devices. The non-transitory, machine-readable medium 1360 may include instructions to direct the processor 1352 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 1382 on the processor 1352 (separately, or in combination with the instructions 1382 of the machine readable medium 1360) may configure execution or operation of a trusted execution environment (TEE) 1390. In an example, the TEE 1390 operates as a protected area accessible to the processor 1352 for secure execution of instructions and secure access to data. Various implementations of the TEE 1390, and an accompanying secure area in the processor 1352 or the memory 1354 may be provided, For example, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 1350 through the TEE 1390 and the processor 1352. As described above in conjunction with FIG. 8, the TEE 1390 may process privacy sensitive telemetry data (e.g., AI inference over telemetry data). In such examples, the TEE 1390 may ensure that the various interests (e.g., conditions) are met as a condition of acceptance and/or disclosure of the telemetry data.

In further examples, a machine-readable medium also includes any tangible medium that is capable of storing, encoding, or carrying instructions for execution by a machine and that cause the machine to perform any one or more of the methodologies of the present disclosure or that is capable of storing, encoding, or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically, or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

The machine executable instructions 1000 (1382) of FIG. 10 may be stored in the memory 1354, the storage 1358, and/or on a removable non-transitory computer readable storage medium such as a CD or DVD

FIG. 14 illustrates a block diagram of an example computing device 1450 structured to execute the instructions of FIG. 11A-11C to implement the techniques (e.g., operations, processes, methods, and methodologies) described herein such as the infrastructure 718 of FIG. 7 and/or 9. This computing device 1450 provides a closer view of the respective components of node 1400 when implemented as or as part of a computing device (e.g., as a mobile device, a base station, server, gateway, etc.). The computing device 1450 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the computing device 1450, or as components otherwise incorporated within a chassis of a larger system. For example, the computing device 1450 can be, for example, a server, a personal computer, a workstation, a self-learning machine (e.g., a neural network), a mobile device (e.g., a cell phone, a smart phone, a tablet such as an iPadTM), a personal digital assistant (PDA), an Internet appliance, a DVD player, a CD player, a digital video recorder, a Blu-ray player, a gaming console, a personal video recorder, a set top box, a headset or other wearable device, an Internet of Things (IoT) device, or any other type of computing device.

The edge computing device 1450 may include processing circuitry in the form of a processor 1452, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 1452 may be a part of a system on a chip (SoC) in which the processor 1452 and other components are formed into a single integrated circuit, or a single package, such as the Edison^{™} or Galileo^{™} SoC boards from Intel Corporation, Santa Clara, California. As an example, the processor 1452 may include an Intel^{®} Architecture Core^{™} based CPU processor, such as a Quark^{™}, an Atom^{™}, an i3, an i5, an i14, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd., or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 1452 and accompanying circuitry may be provided in a single socket form factor, multiple socket form factor, or a variety of other formats, including in limited hardware configurations or configurations that include fewer than all elements shown in FIG. 14. In this example, the processor implements the example infrastructure sidecar circuitry 720, including the example interface(s) 900, the example target endpoint identification circuitry 902, the example comparator 904, the example filter 906, the example brokering controller 908, the example telemetry monitor circuitry 910, and the example topology mapping circuitry 912 of FIG. 9.

The processor 1452 may communicate with a system memory 1454 over an interconnect 1456 (e.g., a bus). Any number of memory devices may be used to provide for a given amount of system memory. As examples, the memory 1454 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD149F for DDR SDRAM, JESD149-2F for DDR2 SDRAM, JESD149-3F for DDR3 SDRAM, JESD149-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q114P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 1458 may also couple to the processor 1452 via the interconnect 1456. In an example, the storage 1458 may be implemented via a solid-state disk drive (SSDD). Other devices that may be used for the storage 1458 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 1458 may be on-die memory or registers associated with the processor 1452. However, in some examples, the storage 1458 may be implemented using a micro hard disk drive (HDD). Further, any number of new technologies may be used for the storage 1458 in addition to, or instead of, the technologies described, such resistance change memories, phase change memories, holographic memories, or chemical memories, among others.

The components may communicate over the interconnect 1456. The interconnect 1456 may include any number of technologies, including industry standard architecture (ISA), extended ISA (EISA), peripheral component interconnect (PCI), peripheral component interconnect extended (PCIx), PCI express (PCIe), or any number of other technologies. The interconnect 1456 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 1456 may couple the processor 1452 to a transceiver 1466, for communications with the connected edge devices 1462. The transceiver 1466 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 1462. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 1466 (or multiple transceivers) may communicate using multiple standards or radios for communications at a different range. For example, the computing device 1450 may communicate with close devices, e.g., within about 10 meters, using a local transceiver based on Bluetooth Low Energy (BLE), or another low power radio, to save power. More distant connected edge devices 1462, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 1466 (e.g., a radio transceiver) may be included to communicate with devices or services in the edge cloud 1495 via local or wide area network protocols. The wireless network transceiver 1466 may be a low-power widearea (LPWA) transceiver that follows the IEEE 802.15.4, or IEEE 802.15.4g standards, among others. The computing device 1450 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 1466, as described herein. For example, the transceiver 1466 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 1466 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 1468 may be included to provide a wired communication to nodes of the edge cloud 1495 or to other devices, such as the connected edge devices 1462 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 1468 may be included to enable connecting to a second network, for example, a first NIC 1468 providing communications to the cloud over Ethernet, and a second NIC 1468 providing communications to other devices over another type of network.

Given the variety of types of applicable communications from the device to another component or network, applicable communications circuitry used by the device may include or be embodied by any one or more of components 1464, 1466, 1468, or 1470. Accordingly, in various examples, applicable means for communicating (e.g., receiving, transmitting, causing transmission of, etc.) may be embodied by such communications circuitry.

The computing device 1450 may include or be coupled to acceleration circuitry 1464, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 1456 may couple the processor 1452 to a sensor hub or external interface 1470 that is used to connect additional devices or subsystems. The devices may include sensors 1472, such as accelerometers, level sensors, flow sensors, optical light sensors, camera sensors, temperature sensors, global navigation system (e.g., GPS) sensors, pressure sensors, barometric pressure sensors, and the like. The hub or interface 1470 further may be used to connect the computing device 1450 to actuators 1474, such as power switches, valve actuators, an audible sound generator, a visual warning device, and the like.

In some optional examples, various input/output (I/O) devices may be present within or connected to, the computing device 1450. For example, a display or other output device 1484 may be included to show information, such as sensor readings or actuator position. An input device 1486, such as a touch screen or keypad may be included to accept input. An output device 1484 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the computing device 1450. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 1476 may power the computing device 1450, although, in examples in which the computing device 1450 is mounted in a fixed location, it may have a power supply coupled to an electrical grid, or the battery may be used as a backup or for temporary capabilities. The battery 1476 may be a lithium ion battery, or a metal-air battery, such as a zinc-air battery, an aluminum-air battery, a lithium-air battery, and the like.

A battery monitor/charger 1478 may be included in the computing device 1450 to track the state of charge (SoCh) of the battery 1476, if included. The battery monitor/charger 1478 may be used to monitor other parameters of the battery 1476 to provide failure predictions, such as the state of health (SoH) and the state of function (SoF) of the battery 1476. The battery monitor/charger 1478 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 1478 may communicate the information on the battery 1476 to the processor 1452 over the interconnect 1456. The battery monitor/charger 1478 may also include an analog-to-digital (ADC) converter that enables the processor 1452 to directly monitor the voltage of the battery 1476 or the current flow from the battery 1476. The battery parameters may be used to determine actions that the computing device 1450 may perform, such as transmission frequency, mesh network operation, sensing frequency, and the like.

A power block 1480, or other power supply coupled to a grid, may be coupled with the battery monitor/charger 1478 to charge the battery 1476. In some examples, the power block 1480 may be replaced with a wireless power receiver to obtain the power wirelessly, for example, through a loop antenna in the computing device 1450. A wireless battery charging circuit, such as an LTC4020 chip from Linear Technologies of Milpitas, California, among others, may be included in the battery monitor/charger 1478. The specific charging circuits may be selected based on the size of the battery 1476, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 1458 may include instructions 1482 in the form of software, firmware, or hardware commands to implement the techniques described herein. Although such instructions 1482 are shown as code blocks included in the memory 1454 and the storage 1458, it may be understood that any of the code blocks may be replaced with hardwired circuits, for example, built into an application specific integrated circuit (ASIC).

In an example, the instructions 1482 provided via the memory 1454, the storage 1458, or the processor 1452 may be embodied as a non-transitory, machine-readable medium 1460 including code to direct the processor 1452 to perform electronic operations in the computing device 1450. The processor 1452 may access the non-transitory, machine-readable medium 1460 over the interconnect 1456. For example, the non-transitory, machine-readable medium 1460 may be embodied by devices described for the storage 1458 or may include specific storage units such as optical disks, flash drives, or any number of other hardware devices. The non-transitory, machine-readable medium 1460 may include instructions to direct the processor 1452 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 1482 on the processor 1452 (separately, or in combination with the instructions 1482 of the machine readable medium 1460) may configure execution or operation of a trusted execution environment (TEE) 1490. In an example, the TEE 1490 operates as a protected area accessible to the processor 1452 for secure execution of instructions and secure access to data. Various implementations of the TEE 1490, and an accompanying secure area in the processor 1452 or the memory 1454 may be provided, For example, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 1450 through the TEE 1490 and the processor 1452.

In further examples, a machine-readable medium also includes any tangible medium that is capable of storing, encoding, or carrying instructions for execution by a machine and that cause the machine to perform any one or more of the methodologies of the present disclosure or that is capable of storing, encoding, or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically, or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

The machine executable instructions 1100 (1482) of FIGS. 11A-11C may be stored in the memory 1454, the storage 1458, and/or on a removable non-transitory computer readable storage medium such as a CD or DVD.

FIG. 15 is a block diagram of an example implementation of the processor circuitry 412 of FIG. 4. In this example, the processor circuitry 1352, 1452 of FIGS. 13 and/or 14 is implemented by a microprocessor 1500. For example, the microprocessor 1500 may implement multi-core hardware circuitry such as a CPU, a DSP, a GPU, an XPU, etc. Although it may include any number of example cores 1502 (e.g., 1 core), the microprocessor 1500 of this example is a multi-core semiconductor device including N cores. The cores 1502 of the microprocessor 1500 may operate independently or may cooperate to execute machine readable instructions. For example, machine code corresponding to a firmware program, an embedded software program, or a software program may be executed by one of the cores 1502 or may be executed by multiple ones of the cores 1502 at the same or different times. In some examples, the machine code corresponding to the firmware program, the embedded software program, or the software program is split into threads and executed in parallel by two or more of the cores 1502. The software program may correspond to a portion or all of the machine readable instructions and/or operations represented by the flowcharts of FIGS. 10-11C.

The cores 1502 may communicate by an example bus 1504. In some examples, the bus 1504 may implement a communication bus to effectuate communication associated with one(s) of the cores 1502. For example, the bus 1504 may implement at least one of an Inter-Integrated Circuit (I2C) bus, a Serial Peripheral Interface (SPI) bus, a PCI bus, or a PCIe bus. Additionally or alternatively, the bus 1504 may implement any other type of computing or electrical bus. The cores 1502 may obtain data, instructions, and/or signals from one or more external devices by example interface circuitry 1506. The cores 1502 may output data, instructions, and/or signals to the one or more external devices by the interface circuitry 1506. Although the cores 1502 of this example include example local memory 1520 (e.g., Level 1 (LI) cache that may be split into an L1 data cache and an L1 instruction cache), the microprocessor 1500 also includes example shared memory 1510 that may be shared by the cores (e.g., Level 2 (L2_ cache)) for high-speed access to data and/or instructions. Data and/or instructions may be transferred (e.g., shared) by writing to and/or reading from the shared memory 1510. The local memory 1520 of each of the cores 1502 and the shared memory 1510 may be part of a hierarchy of storage devices including multiple levels of cache memory and the main memory (e.g., the main memory 1354, 1454 of FIGS. 13 and/or 14). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1502 may be referred to as a CPU, DSP, GPU, etc., or any other type of hardware circuitry. Each core 1502 includes control unit circuitry 1514, arithmetic and logic (AL) circuitry (sometimes referred to as an ALU) 1516, a plurality of registers 1518, the L1 cache 1520, and an example bus 1522. Other structures may be present. For example, each core 1502 may include vector unit circuitry, single instruction multiple data (SIMD) unit circuitry, load/store unit (LSU) circuitry, branch/jump unit circuitry, floating-point unit (FPU) circuitry, etc. The control unit circuitry 1514 includes semiconductor-based circuits structured to control (e.g., coordinate) data movement within the corresponding core 1502. The AL circuitry 1516 includes semiconductor-based circuits structured to perform one or more mathematic and/or logic operations on the data within the corresponding core 1502. The AL circuitry 1516 of some examples performs integer based operations. In other examples, the AL circuitry 1516 also performs floating point operations. In yet other examples, the AL circuitry 1516 may include first AL circuitry that performs integer based operations and second AL circuitry that performs floating point operations. In some examples, the AL circuitry 1516 may be referred to as an Arithmetic Logic Unit (ALU). The registers 1518 are semiconductor-based structures to store data and/or instructions such as results of one or more of the operations performed by the AL circuitry 1516 of the corresponding core 1502. For example, the registers 1518 may include vector register(s), SIMD register(s), general purpose register(s), flag register(s), segment register(s), machine specific register(s), instruction pointer register(s), control register(s), debug register(s), memory management register(s), machine check register(s), etc. The registers 1518 may be arranged in a bank as shown in FIG. 15. Alternatively, the registers 1518 may be organized in any other arrangement, format, or structure including distributed throughout the core 1502 to shorten access time. The bus 1520 may implement at least one of an I2C bus, a SPI bus, a PCI bus, or a PCIe bus.

Each core 1502 and/or, more generally, the microprocessor 1500 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1500 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 16 is a block diagram of another example implementation of the processor circuitry 1352, 1452 of FIGS. 13 and/or 14. In this example, the processor circuitry 1352, 1452 is implemented by FPGA circuitry 1600. The FPGA circuitry 1600 can be used, for example, to perform operations that could otherwise be performed by the example microprocessor 1500 of FIG. 15 executing corresponding machine readable instructions. However, once configured, the FPGA circuitry 1600 instantiates the machine readable instructions in hardware and, thus, can often execute the operations faster than they could be performed by a general purpose microprocessor executing the corresponding software.

More specifically, in contrast to the microprocessor 1500 of FIG. 15 described above (which is a general purpose device that may be programmed to execute some or all of the machine readable instructions represented by the flowcharts of FIGS. 10-11C but whose interconnections and logic circuitry are fixed once fabricated), the FPGA circuitry 1600 of the example of FIG. 16 includes interconnections and logic circuitry that may be configured and/or interconnected in different ways after fabrication to instantiate, for example, some or all of the machine readable instructions represented by the flowcharts of FIGS. 10-11C. In particular, the FPGA 1600 may be thought of as an array of logic gates, interconnections, and switches. The switches can be programmed to change how the logic gates are interconnected by the interconnections, effectively forming one or more dedicated logic circuits (unless and until the FPGA circuitry 1600 is reprogrammed). The configured logic circuits enable the logic gates to cooperate in different ways to perform different operations on data received by input circuitry. Those operations may correspond to some or all of the software represented by the flowcharts of FIGS. 10-11C. As such, the FPGA circuitry 1600 may be structured to effectively instantiate some or all of the machine readable instructions of the flowcharts of FIGS. 10-11C as dedicated logic circuits to perform the operations corresponding to those software instructions in a dedicated manner analogous to an ASIC. Therefore, the FPGA circuitry 1600 may perform the operations corresponding to the some or all of the machine readable instructions of FIGS. 10-11C faster than the general purpose microprocessor can execute the same.

In the example of FIG. 16, the FPGA circuitry 1600 is structured to be programmed (and/or reprogrammed one or more times) by an end user by a hardware description language (HDL) such as Verilog. The FPGA circuitry 1600 of FIG. 16, includes example input/output (I/O) circuitry 1602 to obtain and/or output data to/from example configuration circuitry 1604 and/or external hardware (e.g., external hardware circuitry) 1606. For example, the configuration circuitry 1604 may implement interface circuitry that may obtain machine readable instructions to configure the FPGA circuitry 1600, or portion(s) thereof. In some such examples, the configuration circuitry 1604 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 1606 may implement the microprocessor 1500 of FIG. 15. The FPGA circuitry 1600 also includes an array of example logic gate circuitry 1608, a plurality of example configurable interconnections 1610, and example storage circuitry 1612. The logic gate circuitry 1608 and interconnections 1610 are configurable to instantiate one or more operations that may correspond to at least some of the machine readable instructions of FIGS. 10-11C and/or other desired operations. The logic gate circuitry 1608 shown in FIG. 16 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1608 to enable configuration of the electrical structures and/or the logic gates to form circuits to perform desired operations. The logic gate circuitry 1608 may include other electrical structures such as look-up tables (LUTs), registers (e.g., flip-flops or latches), multiplexers, etc.

The interconnections 1610 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1608 to program desired logic circuits.

The storage circuitry 1612 of the illustrated example is structured to store result(s) of the one or more of the operations performed by corresponding logic gates. The storage circuitry 1612 may be implemented by registers or the like. In the illustrated example, the storage circuitry 1612 is distributed amongst the logic gate circuitry 1608 to facilitate access and increase execution speed.

The example FPGA circuitry 1600 of FIG. 16 also includes example Dedicated Operations Circuitry 1614. In this example, the Dedicated Operations Circuitry 1614 includes special purpose circuitry 1616 that may be invoked to implement commonly used functions to avoid the need to program those functions in the field. Examples of such special purpose circuitry 1616 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1600 may also include example general purpose programmable circuitry 1618 such as an example CPU 1620 and/or an example DSP 1622. Other general purpose programmable circuitry 1618 may additionally or alternatively be present such as a GPU, an XPU, etc., that can be programmed to perform other operations.

Although FIGS. 15 and 16 illustrate two example implementations of the processor circuitry 412 of FIG. 4, many other approaches are contemplated. For example, as mentioned above, modern FPGA circuitry may include an on-board CPU, such as one or more of the example CPU 1620 of FIG. 16. Therefore, the processor circuitry 412 of FIG. 4 may additionally be implemented by combining the example microprocessor 1500 of FIG. 15 and the example FPGA circuitry 1600 of FIG. 16. In some such hybrid examples, a first portion of the machine readable instructions represented by the flowcharts of FIGS. 10-11C may be executed by one or more of the cores 1502 of FIG. 15 and a second portion of the machine readable instructions represented by the flowchart of FIGS. 10-11C may be executed by the FPGA circuitry 1600 of FIG. 16.

In some examples, the processor circuitry 1352, 1452 of FIG. 13 and/or 14 may be in one or more packages. For example, the processor circuitry 500 of FIG. 15 and/or the FPGA circuitry 1500 of FIG. 15 may be in one or more packages. In some examples, an XPU may be implemented by the processor circuitry 1352, 1452 of FIGS. 13 and/or 14, which may be in one or more packages. For example, the XPU may include a CPU in one package, a DSP in another package, a GPU in yet another package, and an FPGA in still yet another package.

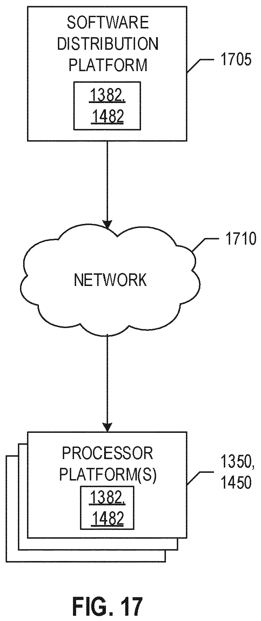

A block diagram illustrating an example software distribution platform 1705 to distribute software such as the example machine readable instructions 1382, 1482 of FIGS. 13 and/or 14 to hardware devices owned and/or operated by third parties is illustrated in FIG. 17. The example software distribution platform 1705 may be implemented by any computer server, data facility, cloud service, etc., capable of storing and transmitting software to other computing devices. The third parties may be customers of the entity owning and/or operating the software distribution platform 1705. For example, the entity that owns and/or operates the software distribution platform 1705 may be a developer, a seller, and/or a licensor of software such as the example machine readable instructions 1382, 1482 of FIGS. 13 and/or 14. The third parties may be consumers, users, retailers, OEMs, etc., who purchase and/or license the software for use and/or re-sale and/or sub-licensing. In the illustrated example, the software distribution platform 1705 includes one or more servers and one or more storage devices. The storage devices store the machine readable instructions 1382, 1482, which may correspond to the example machine readable instructions 1382, 1482 of FIGS. 13 and/or 14 as described above. The one or more servers of the example software distribution platform 1705 are in communication with a network 1710, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1382, 1482 from the software distribution platform 1705. For example, the software, which may correspond to the example machine readable instructions 1382, 1482 of FIGS. 13 and/or 14, may be downloaded to the example processor platform 400, which is to execute the machine readable instructions 1382, 1482 to implement the example IPU sidecar circuitry 714 and/or the infrastructure sidecar circuitry 720 of FIGS. 8 and/or 9. In some example, one or more servers of the software distribution platform 1705 periodically offer, transmit, and/or force updates to the software (e.g., the example machine readable instructions 1382, 1482 of FIGS. 13 and/or 14) to ensure improvements, patches, updates, etc., are distributed and applied to the software at the end user devices.

Example methods, apparatus, systems, and articles of manufacture to facilitate service proxying are disclosed herein. Further examples and combinations thereof include the following: Example 1 includes an apparatus to process service requests, the apparatus including interface circuitry to access a service request intercepted by from an infrastructure processing unit, the service request corresponding to a first node, instructions in the apparatus, and infrastructure sidecar circuitry to execute the instructions to identify an active service instance corresponding to the service request, compare first telemetry data corresponding to the active service instance to a service quality metric, select a second node to service the service request based on the comparison and further telemetry data, and cause transmission of the service request to the second node.

Example 2 includes the apparatus of example 1, wherein the infrastructure sidecar circuitry is to determine that the active service instance corresponds to the intercepted service request based on a topology mapping of service instances across a plurality of platforms.

Example 3 includes the apparatus of example 1, wherein the infrastructure sidecar circuitry is to update a topology mapping based on second telemetry data from the active service instance.

Example 4 includes the apparatus of example 1, wherein the infrastructure sidecar circuitry is to select the second node by processing a topology mapping of service instances to identify a first group of service instances capable of servicing the service request, and generating a second group of service instances by filtering out services instances in the first group that do not have capacity to service the service request.

Example 5 includes the apparatus of example 4, wherein the infrastructure sidecar circuitry is to determine the first group based on at least one of capacity information or response time information from the service instances.

Example 6 includes the apparatus of example 4, wherein the infrastructure sidecar circuitry is to, when the second group of service instances is empty, initiate a new service instance to service the service request.

Example 7 includes the apparatus of example 1, wherein the second node is at least one of an edge appliance, an edge device, a virtual machine, or an infrastructure device.

Example 8 includes the apparatus of example 1, wherein the infrastructure sidecar circuitry is to, when the service request corresponds to a non-default load balancing protocol, select the second node based on the non-default load balancing protocol.

Example 9 includes the apparatus of example 8, wherein the infrastructure sidecar circuitry is to validate that the second node selected based on the non-default load balancing protocol will not result in an error.

Example 10 includes the apparatus of example 1, wherein the further telemetry data includes at least one of first telemetry data corresponding to the first node, second telemetry data corresponding to the second node, or third telemetry data corresponding to infrastructure.

Example 11 includes a non-transitory computer readable medium comprising instruction which, when executed, cause sidecar circuitry to at least access a service request intercepted by from an infrastructure processing unit, the service request corresponding to a first node, identify an active service instance corresponding to the service request, compare first telemetry data corresponding to the service instance to a service quality metric, select a second node to service the service request based on the comparison and further telemetry data, and cause transmission of the service request to the second node.

Example 12 includes the computer readable medium of example 11, wherein the instructions cause the sidecar circuitry to determine that the service instance corresponds to the intercepted service request based on a topology mapping of service instances across a plurality of platforms.

Example 13 includes the computer readable medium of example 11, wherein the instructions cause the sidecar circuitry to update a topology mapping based on second telemetry data from the service instance.

Example 14 includes the computer readable medium of example 11, wherein the instructions cause the sidecar circuitry to select the second node by processing a topology mapping of service instances to identify a first group of service instances capable of servicing the service request, and generating a second group of service instance by filtering out services instances in the first group that do not have capacity to service the service request.

Example 15 includes the computer readable medium of example 14, wherein the instructions cause the sidecar circuitry to determine the first group based on at least one of capacity information or response time information from the service instances.

Example 16 includes the computer readable medium of example 14, wherein the instructions cause the sidecar circuitry to, when the second group of service instances is empty, initiate a new service instance to service the service request.

Example 17 includes the computer readable medium of example 11, wherein the second node is at least one of an edge appliance, an edge device, a virtual machine, or an infrastructure device.

Example 18 includes the computer readable medium of example 11, wherein the instructions cause the sidecar circuitry to, when the service request corresponds to a non-default load balancing protocol, select the second node based on the non-default load balancing protocol.

Example 19 includes the computer readable medium of example 18, wherein the instructions cause the sidecar circuitry to validate that the second node selected based on the non-default load balancing protocol will not result in an error.

Example 20 includes the computer readable medium of example 11, wherein the further telemetry data includes at least one of first telemetry data corresponding to the first node, second telemetry data corresponding to the second node, or third telemetry data corresponding to infrastructure.

Example 21 includes a system to adjust scheduling of service requests, the system comprising an infrastructure processing unit including infrastructure processing unit sidecar circuitry to obtain telemetry information corresponding to a service instances at a plurality of edge devices, cause transmission of the telemetry information to an infrastructure, intercept a service request from one of the plurality of edge devices, and cause transmission of the service request to the infrastructure, and the infrastructure including infrastructure sidecar circuitry to obtain the intercepted service request, and determine whether to adjust scheduling of the service request.

Example 22 includes the system of example 21, wherein the processing unit sidecar circuitry is to compare the telemetry information to historic telemetry information, and adjust a frequency of the transmission of the telemetry information to the infrastructure based on the comparison.

Example 23 includes the system of example 21, wherein the infrastructure sidecar circuitry adjusts the scheduling of the service by at least one of performing load-balancing or auto-scaling.

Example 24 includes the system of example 21, further including generating a service topology mapping based on the telemetry information, the determination of whether to adjust the scheduling of the service request being based on the service topology mapping.

Example 25 includes the system of example 24, wherein the service topology mapping maps service instances and the edge devices across a plurality of platforms.

Example 26 includes an apparatus to facilitate service proxying, the apparatus including interface circuitry to obtain an intercepted service request, and processor circuitry including one or more of at least one of a central processing unit, a graphic processing unit or a digital signal processor, the at least one of the central processing unit, the graphic processing unit or the digital signal processor having control circuitry to control data movement within the processor circuitry, arithmetic and logic circuitry to perform one or more first operations corresponding to instructions, and one or more registers to store a result of the one or more first operations, the instructions in the apparatus, a Field Programmable Gate Array (FPGA), the FPGA including logic gate circuitry, a plurality of configurable interconnections, and storage circuitry, the logic gate circuitry and interconnections to perform one or more second operations, the storage circuitry to store a result of the one or more second operations, or Application Specific Integrate Circuitry (ASIC) including logic gate circuitry to perform one or more third operations, the processor circuitry to perform at least one of the first operations, the second operations or the third operations to instantiate target endpoint circuitry to identify an active service instance corresponding to the intercepted service request, telemetry monitoring circuitry to compare first telemetry data corresponding to the service instance to a service quality metric, and the target endpoint circuitry to select a node to service the service request based on the comparison and further telemetry data, and cause transmission of the service request to the node.

Example 27 includes the apparatus of example 26, wherein the processor circuitry is to determine that the service instance corresponds to the intercepted service request based on a topology mapping of service instances across a plurality of platforms.

Example 28 includes the apparatus of example 26, wherein the processor circuitry is to update a topology mapping based on second telemetry data from the service instance.

Example 29 includes the apparatus of example 26, wherein the processor circuitry is to select the node by processing a topology mapping of service instances to identify a first group of service instances capable of servicing the service request, and generating a second group of service instance by filtering out services instances in the first group that do not have capacity to service the service request.

Example 30 includes the apparatus of example 29, wherein the processor circuitry is to determine the first group based on at least one of capacity information or response time information from the service instances.

Example 31 includes the apparatus of example 29, wherein the processor circuitry is to, when the second group of service instances is empty, initiate a new service instance to service the service request.

Example 32 includes the apparatus of example 26, wherein the node is at least one of an edge appliance, an edge device, a virtual machine, or an infrastructure device.

Example 33 includes the apparatus of example 26, wherein the processor circuitry is to, when the service request corresponds to a non-default load balancing protocol, select the node based on the non-default load balancing protocol.

Example 34 includes the apparatus of example 33, wherein the processor circuitry is to validate that the node selected based on the non-default load balancing protocol will not result in an error.

Example 35 includes the apparatus of example 26, wherein the further telemetry data includes at least one of second telemetry data corresponding to the node or third telemetry data corresponding to infrastructure.

From the foregoing, it will be appreciated that example methods, apparatus and articles of manufacture have been disclosed herein to facilitate service proxying. Disclosed examples provide an infrastructure processing unit (IPU) to utilize infrastructure and appliance telemetry to guide smart scheduling across the edge and edge to cloud migration of services. Using examples disclosed herein, the role of the IPU and the infrastructure is extended through the use of IPU sidecar circuitry (e.g., logic implemented in a container) and infrastructure sidecar circuitry to achieve low latency service management with guidance from software, while making service mesh execution efficient and extensible. By including the IPU sidecar circuitry in the IPU , as opposed to having networking sidecar circuitry in each node of a platform, the amount of resources of the nodes in a platform are freed up for other tasks, while the IPU manages network communications. For this integration of dynamic load balancing, auto-scaling, and local orchestration, examples disclosed herein create an "IPU-mesh" in which one or more IPUs that host application sidecars also communicate with an infrastructure extension (e.g., an infrastructure sidecar circuitry). Accordingly, disclosed methods, apparatus and articles of manufacture are directed to one or more improvement(s) in the functioning of a computer.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. An apparatus to process service requests, the apparatus including:
interface circuitry to access a service request intercepted by from an infrastructure processing unit, the service request corresponding to a first node;
instructions in the apparatus; and
infrastructure sidecar circuitry to execute the instructions to:
identify an active service instance corresponding to the service request;
compare first telemetry data corresponding to the active service instance to a service quality metric;
select a second node to service the service request based on the comparison and further telemetry data; and
cause transmission of the service request to the second node.

2. The apparatus of claim 1, wherein the infrastructure sidecar circuitry is to determine that the active service instance corresponds to the intercepted service request based on a topology mapping of service instances across a plurality of platforms.

3. The apparatus of any one of claims 1-2, wherein the infrastructure sidecar circuitry is to update a topology mapping based on second telemetry data from the active service instance.

4. The apparatus of any one of claims 1-3, wherein the infrastructure sidecar circuitry is to select the second node by:
processing a topology mapping of service instances to identify a first group of service instances capable of servicing the service request; and
generating a second group of service instances by filtering out services instances in the first group that do not have capacity to service the service request.

5. The apparatus of claim 4, wherein the infrastructure sidecar circuitry is to determine the first group based on at least one of capacity information or response time information from the service instances.

6. The apparatus of claim 4, wherein the infrastructure sidecar circuitry is to, when the second group of service instances is empty, initiate a new service instance to service the service request.

7. The apparatus of any one of claims 1-6, wherein the second node is at least one of an edge appliance, an edge device, a virtual machine, or an infrastructure device.

8. The apparatus of any one of claims claim 1-6, wherein the infrastructure sidecar circuitry is to, when the service request corresponds to a non-default load balancing protocol, select the second node based on the non-default load balancing protocol.

9. The apparatus of claim 8, wherein the infrastructure sidecar circuitry is to validate that the second node selected based on the non-default load balancing protocol will not result in an error.

10. The apparatus of and one of claims 1-9, wherein the further telemetry data includes at least one of first telemetry data corresponding to the first node, second telemetry data corresponding to the second node, or third telemetry data corresponding to infrastructure.

11. A method comprising:
accessing a service request intercepted by from an infrastructure processing unit, the service request corresponding to a first node;
identifying an active service instance corresponding to the service request;
comparing first telemetry data corresponding to the service instance to a service quality metric;
selecting a second node to service the service request based on the comparison and further telemetry data; and
causing transmission of the service request to the second node.

12. The method of claim 11, further including determining that the service instance corresponds to the intercepted service request based on a topology mapping of service instances across a plurality of platforms.

13. The method of any one of claims 11-12, further including a topology mapping based on second telemetry data from the service instance.

14. The method of any one of claims 11-13, wherein the selecting the second node includes:
processing a topology mapping of service instances to identify a first group of service instances capable of servicing the service request; and
generating a second group of service instance by filtering out services instances in the first group that do not have capacity to service the service request.

15. A machine readable medium including code, when executed, to cause a machine to realize the apparatus of any one of claims 1-10.
